# EUROPÄISCHE PATENTSCHRIFT

(11) **EP 4 061 624 B1**
(45) Veröffentlichungstag und Bekanntmachung des Hinweises auf die Patenterteilung: **31.12.2025**
(21) Anmeldenummer: 20792592.6
(22) Anmeldetag: 12.10.2020
(51) Int. Cl.: B29C 73/16, B29C 73/14

(54) **VORRICHTUNG ZUM TRANSPORTIEREN VON DRUCKLUFT UND/ODER DICHTMITTEL IN EINEN FAHRZEUGLUFTREIFEN UND TRAGBARES/TRANSPORTABLES SYSTEM ZUM ABDICHTEN UND AUFPUMPEN VON FAHRZEUGLUFTREIFEN**
APPARATUS FOR TRANSPORTING COMPRESSED AIR AND/OR SEALANT IN A VEHICLE TIRE AND PORTABLE/TRANSPORTABLE SYSTEM FOR SEALING AND INFLATING VEHICLE TIRES
APPAREIL POUR TRANSPORTER DE L'AIR COMPRIMÉ ET/OU UN AGENT D'ÉTANCHÉITÉ DANS UN PNEU DE VÉHICULE ET SYSTÈME PORTABLE/TRANSPORTABLE POUR ÉTANCHÉIFIER ET GONFLER DES PNEUS DE VÉHICULE

(30) Priorität: 19.11.2019 DE 102019217775
(43) Veröffentlichungstag der Anmeldung: 28.09.2022
(73) Patentinhaber: Continental Reifen Deutschland GmbH, 30175 Hannover (DE)
(72) Erfinder: SCHLOSSER, Florian, 30165 Hannover (DE); DETERING, Rainer, 30165 Hannover (DE)
(74) Vertreter: Continental Corporation
(86) Internationale Anmeldenummer: PCT/EP2020/078640
(87) Internationale Veröffentlichungsnummer: WO 2021/099028

(56) Entgegenhaltungen:
- EP-A1- 1 621 325
- WO-A1-02/066236
- WO-A1-2009/052576
- DE-A1- 102007 003 667

## Beschreibung

Die Erfindung betrifft eine Vorrichtung zum Transportieren von Druckluft und/oder Dichtmittel in einen Fahrzeugluftreifen.

Die Erfindung betrifft auch ein tragbares/transportables System sowie entsprechende Verfahren und entsprechende Verwendungen.

Bereits seit längerer Zeit sind Reparatursätze oder Pannensets zur temporären Reparatur des Reifens bekannt, die einen Kompressor, eine Verteilervorrichtung, ein Dichtmittel, die entsprechenden Verbindungsschläuche und die notwendigen Kabelanschlüsse zur Energiezufuhr sowie Bedienelemente beinhalten und somit einen ständig einsetzbaren und vollständigen Reparatursatz als Ersatz zum Reserverad darstellen.

In herkömmlichen Systemen wird der pannenbehaftete Reifen mit Luft aus einem Kompressor gegen das Ausströmen der Luft durch die im Reifen vorhandene Leckage zumindest teilweise wiederbefüllt. Bei diesem Wiederbefüllen des pannenbehafteten Reifens mit Druckluft aus dem Kompressor befindet sich das Pannenhilfesystem im so genannten Druckluftmodus. Bei solch bekannten Pannenhilfesystemen wird anschließend nach dem zumindest teilweisen Wiederbefüllen des Reifens Dichtmittel aus einem entsprechenden Dichtmittelbehälter in den beschädigten Reifen gefördert. Bei diesem Befördern von Dichtmittel in den pannenbehafteten Reifen befindet sich das Pannenhilfesystem im so genannten Dichtmittelmodus. Das Hineinfördern des Dichtmittels in den beschädigten Reifen kann jedoch erst erfolgen, sobald bestimmte Voraussetzungen, wie beispielsweise ein bestimmter Mindestdruck im zumindest teilweisen wiederbefüllten Reifen, eingestellt sind.

Erst nach Aufpumpen des Dichtmittel befüllten Pannenreifens bis zu einem stabilen Mindestdruck und anschließender langsamer Weiterfahrt des aufgepumpten Reifens, kann ein komplettes Abdichten der Leckage erfolgen.

Wie bereits vorstehend erläutert kann das Hineinführen des Dichtmittels in den Reifen nicht von Anfang an erfolgen und muss häufig in bisherigen Systemen manuell durch den Anwender ausgelöst werden. Hierzu muss der meist ungeübte Anwender in ungewohnter Situation bei bisherigen Pannensetsystemen verschiedene Teile auf komplizierte Weise miteinander verbinden oder unter großen Kraftaufwand das Hineinbefördern des Dichtmittels in den Reifen starten. Bei letzterem entsteht insbesondere die Gefahr eine ungenügenden Kraftaufwands, welcher zu einer ungenügenden Abdichtung des pannenbehafteten Reifens führen kann.

Vorrichtungen zum Transportieren von Druckluft und/oder Dichtmittel in einen Fahrzeugluftreifen werden im Stand der Technik auch als "Entnahmeelement", "Verteilervorrichtung", "Vorrichtung zum Einbringen von Luft und/ oder Abdichtmittel in einen Reifen", "Vorrichtung zum Ausbringen von Reifendichtmittel aus einem Behälter", "bottle cap", "Aufnahmeeinheit" und "Extraktionseinheit" bezeichnet.

Im Stand der Technik sind verschiedene Verteilervorrichtungen bekannt:
DE 102015119917 A1 offenbart ein "Verfahren zum Ausbringen eines Mittels zum Abdichten eines aufblasbaren Gegenstandes, [...] [wobei] in einer ersten Position des Ventils (6) Einlass (7) und Auslass (8) miteinander verbunden werden und in einer zweiten Position des Ventils (6) eine Verbindung zwischen Einlass (7) und Behälter (5) sowie Behälter (5) und Auslass (8) hergestellt wird, dadurch gekennzeichnet, dass der Behälter (5) an dem Ventil (6) erst bei Bedarf von Dichtmittel in oder an einer Aufnahme (23) des Ventils (6) festgelegt wird" (s. Anspruch 1). Dabei sei der Vorteil, "dass das Dichtmittel in dem Behälter länger haltbar ist. Denn wenn es nicht gebraucht wird, wird es nicht geöffnet und somit tritt keine Luft und/oder Verunreinigungen in den Behälter" (s. Absatz [0013])
EP 2338671 B1 offenbart eine "Vorrichtung (10) zum Einbringen von Luft und/ oder Abdichtmittel in einen Reifen [...] dadurch gekennzeichnet, dass zur Verbindung zwischen dem Druckerzeugungsmittel (18) und dem zu befüllenden Reifen einerseits sowie zwischen dem Auslass des Behälters (14) und dem zu befüllenden Reifen andererseits derselbe Schlauch (30) vorgesehen ist, wobei das Umschaltventil (40, 40') dazu ausgebildet ist, in Abhängigkeit von seiner Schaltstellung entweder eine direkte Strömungsverbindung zwischen dem Druckerzeugungsmittel (18) und dem Schlauch (30) oder eine Strömungsverbindung zwischen dem Druckerzeugungsmittel (18) und dem Einlass des Behälters (14) einerseits sowie zwischen dem Auslass des Behälters (14) und dem Schlauch (30) andererseits bereitzustellen" (s. Anspruch 1).

DE 10106468 B4 offenbart eine "Vorrichtung zum Ausbringen von Reifendichtmittel aus einem Behälter (1), welchem ein Entnahmeelement (2.1 bis 2.3) zum Ausbringen von Reifendichtmittel zugeordnet ist, wobei das Entnahmeelement (2.1 bis 2.3) ein Ventil (12.1 bis 12.3) aufweist und das Ventil einen Einlass (3) und einen Auslass (4) aufweist, an den Einlass (3) eine Luftdruckquelle (6) und an den Auslass (4) eine Verbindungsleitung (8) zum Verbinden mit einem Reifen (9) anschließbar ist und in einer ersten Einstellung des Ventils (12.1 bis 12.2) über zumindest einen Bypass Einlass (3) und Auslass (4) miteinander verbindbar sind und in einer zweiten Position des Ventils eine Verbindung zwischen Einlass (3) und Behälter (1) sowie Behälter (1) und Auslass (4) hergestellt ist" (s. Anspruch 1). Die Aufgabe sei hierbei gewesen, "die Vorrichtung kostengünstig herzustellen, leicht zu bedienen und bei geringstem Einbauraum in jedem beliebigen Fahrzeug unterbringbar" zu sein (s. Absatz [0007]).

CN 106809187 A offenbart ein Aufpump- und Reifenreparatur-Kit mit einer rotierbaren Einheit, welche die Gaspump- und Reifenreparatur-Funktionen steuert, um eine Fehlfunktion durch eine falsche Bedienung zu vermeiden (vgl. Abstract).

WO 2017063105 A1 offenbart eine "bottle-cap" mit einem rotierbaren Fließkanal-Wechselelement, wobei das Wechselelement zwei Fließkanäle aufweist und einer der beiden Fließkanäle bogenförmig ausgestaltet ist (vgl. Anspruch 1). Vorteilhaft sei, dass die "bottle-cap" mit einer Vielzahl von Kompressoren zusammenzuschließen sei (vgl. [0020]).

WO 2013114751 A1 offenbart ein Reifenreparatur-Kit mit einer Wechselkappe, welche beim Anbringen an das Kit-Gehäuse das vollmanuelle Umschalten von einer Fließpassage in eine andere Fließpassage des Kits bewirkt (vgl. Anspruch 1). Das Kit verbessere somit die Operabilität und es seien noch kleinere Ausführungen des Kits möglich (vgl. [0029]). Zudem könne verhindert werden, dass Dichtmittel aus dem Dichtmittegefäß während des Lagerns auslaufe (vgl. [0030]).

WO 2013103055 A1 offenbart ein Reifenreparatur-Kit mit Wechselmitteln, welche beim Herunterdrücken in eine Aufnahmemundportion des Kit-Gehäuses ein Umschalten von einer Fließpassage in eine andere Fließpassage des Kits bewirkt (vgl. Anspruch 1). Das Kit verbessere somit die Operabilität und es seien noch kleinere Ausführungen des Kits möglich (vgl. [0017]). Zudem könne verhindert werden, dass Dichtmittel aus dem Dichtmittegefäß während des Lagerns auslaufe (vgl. [0018]).

CN 203836455 U offenbart eine Reifenreparaturflasche mit eine Fluidflussrichtungswechseleinheit und mit mehreren Ein- und Ausgängen, welches einfach zu gebrauchen sei (vgl. Abstract).

WO 2013042448 A1 offenbart ein Reparaturkit umfassend einen Extraktionskappe und einen Kompressor, wobei die Kappe und der Kompressor eine Kupplungsdüse und einen Düsenempfänger aufweisen (vgl. Anspruch 1). Das Kit sei besser geschützt vor Ausdringen des Dichtmittels während der Lagerung und dagegen, dass der innere Deckel bei Bedarf nicht abgehe (vgl. [0022]).

WO 2013042545 A1 offenbart ein Reparaturkit mit einer koaxial um ein Düsenrohr angeordneten "sheath pipe", welche an dem Düsenrohr in Längsrichtung verschoben werden kann und somit einen zweiten Fließkanal öffnet (vgl. Anspruch 1 und Anspruch 2).

Das Kit sei besser geschützt vor Ausdringen des Dichtmittels während der Lagerung und dagegen, dass der innere Deckel bei Bedarf nicht abgehe (vgl. [0022]).

Die WO 02/066236A1 offenbart ein Gerät, gemäß dem Oberbegriff des Anspruchs 1, welches zum Abdichten und Aufpumpen eines aufblasbaren Objekts dient, z.B. eines Reifens, das mit einem Aufpumpventil versehen ist. Das Gerät ist von einer solchen Art, die eine Druckgasquelle und einen Behälter mit einem Dichtmittel umfasst. Ferner umfasst das Gerät ein Umschalt-ventil, das in einer ersten Position für das Öffnen einer ersten Verbindung zwischen der Druckgasquelle und dem Aufpump-ventil des Objekts und in einer zweiten Position für das Öffnen einer zweiten Verbindung zwischen der Druckgasquelle und dem Behälter und ferner zwischen diesem und dem Auf-pump-ventil des Objekts vorgesehen ist. Das Gerät kann in einer Funktionsweise zum Aufpumpen eines Objekts, das Luft verloren hat, auf den vorgeschriebenen Druck und in einer anderen Funktionsweise zum Abdichten und Aufpumpen eines undicht gewordenen Objekts verwendet werden. Dadurch wird das schwere und sperrige von Autofahrern herkömmlich mitgeführte Ersatz-rad überflüssig gemacht.

Die EP 1621325A1 betrifft eine Vorrichtung zum Abdichten von Reifen mit einem ein Abdichtmittel enthaltenden Behälter, der über eine erste Druckluftleitung mit einem Kompressor und über ein Ende einer zweiten Druckluftleitung an den Reifen anschließbar ist, wobei die erste Druckluftleitung und die zweite Druckluftleitung über den Behälterinnenraum des Behälters miteinander in Verbindung stehen und wobei die Vorrichtung ein Filterelement enthält, durch das das Dichtmittel fließt, bevor es aus dem Ende der zweiten Druckluftleitung austritt.

Ferner offenbart die DE 102007003667A1 eine Vorrichtung zum Abdichten und Aufpumpen aufblasbarer Gegenstände, die ein in mindestens zwei Positionen schaltbares Ventil aufweist, welches einer Druckgasquelle zugeordnet ist und mit mindestens zwei Kanälen so mit einer Ventil- und Verteilereinheit verbunden ist, dass in der ersten Schaltposition der erste Kanal Druckgas führt und in der zweiten Schaltposition der zweite Kanal Druckgas führt, wobei eine mit dem zweiten Kanal verbundene druckbetätigte Schalteinheit bei Druckgasbeaufschlagung eine Verbindung des zweiten Kanals zum Dichtmittelbehälter schaltet.

Eine Aufgabe, die der Erfindung zugrunde liegt, besteht darin, eine Vorrichtung zum Transportieren von Druckluft und/oder Dichtmittel in einen Fahrzeugluftreifen, insbesondere ein tragbares/transportables System zum Abdichten und Aufpumpen von Fahrzeugluftreifen, bereitzustellen, welches leichter für einen ungeübten Benutzer bedienbar ist, insbesondere so ausgestaltet ist, dass vor dem Einsatz der Vorrichtung oder des Systems
- einzelne Teile der Vorrichtung oder des Systems nur einmalig oder bestenfalls gar nicht mehr miteinander verbunden werden müssen
   und/oder
- der Benutzer nur einmalig oder bestenfalls überhaupt nicht mehr während des Betriebs der Vorrichtung oder des Systems eingreifen muss.

Gelöst wird diese Aufgabe erfindungsgemäß durch eine Vorrichtung zum Transportieren von Druckluft und/oder Dichtmittel in einen Fahrzeugluftreifen umfassend:
- mindestens einen Gasanschluss zur Verbindung mit mindestens einer Druckluftquelle,
- mindestens einen Dichtmittelanschluss zur Verbindung mit mindestens einem Dichtmittelbehälter,
- mindestens zwei Kanäle, wobei ein erster Kanal ein Dichtmitteltransportkanal zum Transportieren einer Dichtmitteldispersion vom Dichtmittelanschluss in einen Fahrzeugluftreifen ist und ein zweiter Kanal ein Drucklufttransportkanal zum Transportieren von Druckluft zum Dichtmittelanschluss oder zum Dichtmitteltransportkanal ist,
dadurch gekennzeichnet, dass
die Vorrichtung ein bewegbares Umschaltelement aufweist, wobei das bewegbare Umschaltelement in Richtung des Dichtmittelanschluss mittels eines vom Gasanschluss kommenden Druckluftstromes bewegt werden kann und einen Durchtrennungsabschnitt zum Durchtrennen eines Siegels aufweist.

Es ist eine großartige Leistung der vorliegenden Erfindung, herausgefunden zu haben, dass mit einem vorstehend beschriebenen Umschaltelement in Verbindung mit einem vorstehend beschriebenen Durchtrennungsabschnitt an dem Umschaltelement einer erfindungsgemäßen Vorrichtung ein Pannenhilfesystem bereitzustellen, bei dem ein Anwender
- das Pannenhilfesystems mit einer erfindungsgemäßen Vorrichtung nicht mehr gezwungen wird, verschiedene Teile miteinander zu verbinden, um vom Druckluftmodus in den Dichtmittelmodus umzuschalten,
   und gleichzeitig
- keinen großen Kraftaufwand oder gar keinen Kraftaufwand mehr aufwenden muss, um vom Druckluftmodus in den Dichtmittelmodus umzuschalten.

Daher wird die Anwendung eines Pannenhilfesystems für den Anwender stark vereinfacht, wenn dem verwendeten Pannenhilfesystem eine erfindungsgemäße Vorrichtung wie vorstehend oder nachstehend beschrieben eingesetzt wird. Zudem ist es möglich mit einer erfindungsgemäßen Vorrichtung ein einteiliges Pannenhilfesystem bereitzustellen und somit das komplizierte Verbinden mehrerer Teile eines Pannenhilfesystems zu vermeiden. Auch dies erleichtert die Anwendung für den Anwender eines Pannenhilfesystems.

Die vorstehend beschriebene starke Vereinfachung aufgrund eines einteiligen Pannenhilfesystems ist insbesondere vorteilhaft gegen die vorstehend beschriebenen mehrteiligen Pannenhilfesysteme gemäß den Dokumenten EP 2746032 A1, EP 2746033 A1, EP 2792473 A1 und EP 2810767 A1, in denen das Umschalten vom Druckluftmodus in den Dichtmittelmodus aufgrund eines gegenüber der vorliegenden Erfindung verschiedenen Stecksystems erreicht wird.

Zudem ermöglicht eine erfindungsgemäße Vorrichtung wie vorstehend beschrieben, dass trotz des Vorhandenseins lediglich dreier Anschlüsse, nämlich des Anschlusses zu dem Reifen mit der Panne, eines Gasanschlusses und eines Dichtmittelanschlusses, die von der Druckluftquelle produzierte Druckluft nicht zwischen verschiedenen Transportkanälen hin und her geschaltet werden muss. Der vereinfachte Aufbau einer erfindungsgemäßen Vorrichtung wie vorstehend oder nachstehend beschrieben stellt insbesondere einen Vorteil gegenüber den Gegenständen gemäß den Dokumenten CN 203836455 U, EP 2746032 A1, EP 2746033 A1 und EP 2810767 A1, bei denen die Aufnahmeeinheit mehr als drei Anschlüsse aufweist.

Bevorzugt ist daher eine erfindungsgemäße Vorrichtung wie vorstehend oder nachstehend beschrieben, wobei die erfindungsmäßen Vorrichtung neben dem Dichtmittelanschluss und dem Gasanschluss sowie dem Verbindungsanschluss zum Reifen am Dichtdichtmitteltransportkanal keinen weiteren Anschluss aufweist und/oder zur Herstellung eines einteiligen Systems zum Abdichten und Aufpumpen von Fahrzeugluftreifen geeignet ist.

Die vorstehend beschriebenen Vorteile werden dadurch erzielt, dass ein Siegel am Dichtmittelbehälter mittels des bewegbaren Umschaltelements einer erfindungsgemäßen Vorrichtung durchtrennt werden kann, indem das bewegbare Umschaltelement der erfindungsgemäßen Vorrichtung unter Ausnutzung der Druckluft aus der Druckluftquelle zum Auslösen des Dichtmittelmodus verwendet werden kann. Das Auslösen der Bewegung des Umschaltelements einer erfindungsgemäßen Vorrichtung kann hierbei auf verschiedene Weisen erfolgen. Beispielsweise könnte der Druck im Kompressor erhöht werden und somit die Bewegung des Umschaltelements ausgelöst werden. Weitere Möglichkeiten sind die nachstehend beschriebenen elektronisch oder manuell manipulierbare Halteeinheit, welche mittels eines Auslöselements zum manuellen Lösen oder mittels einer nachstehend beschriebenen elektronischen Steuerungs -oder Regelungseinheit verwendet werden kann, um die besagte Bewegung des Umschaltelements auszulösen. Ein Siegel, welcher mittels des Durchtrennungsabschnittes des Umschaltelements einer erfindungsgemäßen Vorrichtung durchtrennt werden kann, kann sowohl am Dichtmittelanschluss einer erfindungsmäßen Vorrichtung als auch am Verschluss eines Dichtmittelbehälters, welcher mit dem Dichtmittelanschluss einer erfindungsmäßen Vorrichtung verbunden werden kann, angebracht sein. Letztere ist vorteilhaft, da ein Austausch des Dichtmittelbehälters, welcher üblicher Weise mit einem Mindesthaltbarkeitsdatum für das enthaltene Dichtmittel versehen ist, vereinfacht wird im Vergleich zu einer Ausführungsform, in der sich das Siegel im Dichtmittelanschluss der erfindungsgemäßen Vorrichtung befindet.

Im Rahmen der vorliegenden Erfindung ist das bewegbare Umschaltelement bevorzugt so in einer erfindungsgemäßen Vorrichtung angebracht und dazu vorgesehen, ein Siegel am Dichtmittelanschluss einer erfindungsmäßen Vorrichtung oder am Dichtmittelbehälter zu durchtrennen. Im Rahmen der vorliegenden Erfindung umfasst der Durchtrennungsabschnitt des bewegbaren Umschaltelements einer erfindungsgemäßen Vorrichtung bevorzugt mindestens eine Kante zum Durchtrennen eines Siegels und/oder mindestens eine Ecke zum Durchtrennen eines Siegels, welche so am Durchtrennungsabschnitt des bewegbaren Umschaltelements angebracht ist, dass sie bei einer Bewegung des Umschaltelements in Richtung des Dichtmittelanschlusses ein Siegel am Dichtmittelanschluss einer erfindungsmäßen Vorrichtung oder am Dichtmittelbehälter durchtrennen kann. Beispiele für eine Kante zum Durchtrennen eines Siegels oder eine Ecke zum Durchtrennen eines Siegels sind solche, welche an haushaltsüblichen Messern verwendet werden.

Die Verwendung eines Siegels zum Freisetzen des Dichtmittels und zum Überführen des Dichtmittels in einen Reifen hat zudem den Vorteil, dass die Herstellung des Pannenhilfesystems erleichtert wird, da die erfindungsgemäße Vorrichtung nicht von Anfang an mit einem Dichtmittelbehälter ausgestattet werden muss und hat zudem den Vorteil dass der Dichtmittelbehälter nach Ablauf der Haltbarkeit des Dichtmittels problemlos ausgetauscht werden kann. Bei einigen im Stand der Technik bekannten Lösungen muss beim Austausch des Dichtmittelbehälters hingegen auch die Entnahmeeinheit des einen Hilfesystems entfernt werden, wodurch die Umwelt stärker belastet wird.

Im Rahmen der vorliegenden Erfindung beschreibt der Ausdruck "Reifen" insbesondere einen Luftreifen und einen Fahrzeugluftreifen.

Im Rahmen der vorliegenden Erfindung werden die Ausdrücke "Leckage" und "Panne" Synonym verwendet.

Im Rahmen der vorliegenden Erfindung ist der Dichtmitteltransportkanal eine erfindungsgemäße Vorrichtung insbesondere zum Transportieren einer Dichtmitteldispersion vom Dichtmittelanschluss in einen Fahrzeugluftreifen geeignet, wobei die Dichtmitteldispersion Dichtmittelpartikel und als kontinuierliche Phase und Dispersionsmatrix Druckluft umfasst. Grundsätzlich sollte der Dichtmitteltransportkanal jedoch auch dazu geeignet sein, fließendes flüssiges Dichtmittel, beispielsweise in Form von großen Tropfen oder Bulk-Volumina, welche den gesamten Innendurchmesser des Dichtmitteltransportkanals ausfüllen, zu transportieren.

Bevorzugt ist eine erfindungsgemäße Vorrichtung wie vorstehend beschrieben oder wie vorstehend als bevorzugt beschrieben, wobei das bewegbare Umschaltelement im Drucklufttransportkanal angeordnet ist und/oder ein, zwei, drei vier, fünf oder mehr als fünf Luftstrombrechungselemente aufweist, wobei das eine oder die Luftstrombrechungselemente geeignet sind, zumindest teilweise die im Wesentlichen zur Bewegungsrichtung des Umschaltelements parallel verlaufenden Strömungsrichtung von Druckluft im Drucklufttransportkanal abzulenken oder so abzulenken, dass im Drucklufttransportkanal das bewegbare Umschaltelement mittels aus einer Druckluftquelle kommenden Druckluft in Richtung des Dichtmittelanschluss zu bewegen.

Ein Vorteil des vorstehend beschriebenen Aspekts der vorliegenden Erfindung ist, dass je mehr Luftstrombrechungselemente das Umschaltelement einer erfindungsmäßen Vorrichtung hat, desto zuverlässiger kann ein Siegel durch den Durchtrennungsabschnitt des bewegbaren Umschaltelements durchtrennt werden. Drei Beispiele der vielen möglichen Ausführungsformen für die besagten Luftstrombrechungselemente können von der Oberfläche des bewegbaren Umschaltelements ab bestehende Ausformungen wie beispielsweise Haken oder astähnlichen Gebilde, oder auch O-Ringe sein.

Das erfindungsgemäße bewegbare Umschaltelement ist zumindest im Wesentlichen in Form eines Hohlzylinders ausgebildet und weist einen Innenkanal auf, wobei das Umschaltelement entlang der Höhenerstreckung des Hohlzylinders im Zusammenwirken mit der Innenwand des Drucklufttransportkanals mehrere Abschnitte bildet, wobei die mehreren Abschnitte zumindest die folgenden Abschnitte umfassen:
- einen Umgehungsabschnitt zum Leiten von Druckluft vom Drucklufttransportkanal direkt in den Dichtmitteltransportkanal
   und
- einen Aktivierungsabschnitt, wobei der Aktivierungsabschnitt dazu eingerichtet ist, vom Gasanschluss kommende Druckluft zum Bewegen des Umschaltelements in Richtung des Dichtmittelanschlusses zu verwenden.

Bevorzugt sind die vorstehend beschriebenen drei Abschnitte, nämlich Durchtrennungsabschnitt, Umgehungsabschnitt und Aktivierungsabschnitt, so am bewegbaren Umschaltelement einer erfindungsmäßen Vorrichtung angebracht, dass der Teil des bewegbaren Umschaltelements, welcher in einer erfindungsgemäßen Vorrichtung dem Dichtmittelanschluss am nächsten gelegen ist, der Durchtrennungsabschnitt des bewegbaren Umschaltelements, wobei dann vom Dichtmittelanschluss der erfindungsmäßen Vorrichtung weg nach dem Durchtrennsabschnitt der Umgehungsabschnitt und anschließend der Aktivierungsabschnitt am bewegbaren Umschaltelement folgt.

Ein Vorteil des vorstehend beschriebenen Aspekts der vorliegenden Erfindung ist, dass mit der vorstehend beschriebenen Form eines bewegbaren Umschaltelements einer besonders bevorzugten erfindungsmäßen Vorrichtung wie vorstehend beschrieben einerseits ein Siegel noch im Vergleich zu anderen erfindungsgemäßen Ausführungsformen noch zuverlässiger durchtrennt werden kann. Die vorstehend beschriebene Form eines bewegbaren Umschaltelements ermöglicht aufgrund des Innenkanal des Hohlzylinders zusätzlich, dass eine möglichst große Luftmenge nach Durchtrennen des Siegels in den Dichtmittelbehälter gefördert werden kann, um mit einem möglichst hohen Druck das Dichtmittel aus dem Dichtmittelbehälter in den pannenbehafteten Reifen zu befördern. Der vorstehend beschriebene mittels der Verwendung eines Innenkanals erhöhte Druck führt, dazu dass zumindest ein Teil des Dichtmittels zusammen mit einem Teil der Druckluft in eine vorstehend beschriebene Dispersion übergeht und somit die Leckage im Reifen, insbesondere für das Dichtmittel schwer erreichbare Leckagen im Reifen, besser abdichten kann.

Insbesondere gegenüber dem vollmanuellen Umschalten des Pannenhilfesystems, welches in Dokument EP 2746032 A1 in Figur 2 und deren Figurenbeschreibung offenbart wird, stellt der vorstehend beschriebene Aktivierungsabschnitt des bewegbaren Umschaltelements eine erfindungsgemäße Vorrichtung, da in EP 2746032 A1 der Druckluftstrom lediglich von einem Anschluss (siehe Bezugszeichen 12) auf den gegenüberliegenden Anschluss (siehe Bezugszeichen 12) geleitet wird und die Druckluft nicht für eine Bewegung eines Elementes der Entnahmeeinheit verwendet wird. Die Ausnutzung des Druckluftstromes zum Umschalten vom Druckluftmodus in den Dichtmittelmodus eines Pannenhilfesystems ist daher ein technischer Effekt der vorliegenden Erfindung.

Im Rahmen der vorliegenden Erfindung bedeutet der Ausdruck "Leiten von Druckluft vom Drucklufttransportkanal direkt in den Dichtmitteltransportkanal" insbesondere, dass die Druckluft nicht vor dem Passieren des Dichtmitteltransportkanals in den Dichtmittelbehälter geleitet wird und somit nicht mit Dichtmittel in Kontakt kommt.

Im Rahmen der vorliegenden Erfindung werden die vorstehend beschriebenen Abschnitte bevorzugt durch O-Ringe getrennt, wobei die O-Ringe insbesondere als vorstehend beschriebene Luftstrombrechungselemente fungieren. Der Aktivierungsabschnitt kann jedoch vorteilhafterweise Strombrechungselemente weiterer Arten wie vorstehend beschrieben umfassen.

Besonders bevorzugt ist auch eine erfindungsgemäße Vorrichtung wie vorstehend beschrieben oder wie vorstehend als bevorzugt beschrieben und insbesondere wie vorstehend als besonders bevorzugt beschrieben, wobei das Umschaltelement entlang der Höhenerstreckung des Hohlzylinders im Zusammenwirken mit der Innenwand des Drucklufttransportkanals mindestens einen weiteren Abschnitt bildet, wobei der eine weitere Abschnitt so ausgeformt ist, dass vom Gasanschluss kommende Druckluft durch den Innenkanal des Umschaltelements in Form eines Hohlzylinders und anschließend in Richtung des Dichtmittelanschlusses oder in einen Dichtmittelbehälter geleitet werden kann.

Ein Vorteil des vorstehend beschriebenen Aspekts der vorliegenden Erfindung ist, dass gewährleistet wird, dass nach der Bewegung des bewegbaren Umschaltelements und dem Durchtrennen eines Siegels der Druckluftstrom auch Druckluft nach dem Passieren des Innenkanals auf das Dichtmittel im Dichtmittelbehälter trifft. Anschließend wird das Dichtmittel durch den anhaltenden Druckluftstromes aus dem Innenkanal des bewegbaren Umschaltelements einer erfindungsgemäßen Vorrichtung vorbei in den Dichtmitteltransportkanäle gedrückt und weiter zum Reifen mit der Panne transportiert. Im Dichtmitteltransportkanal und in dem Reifen mit der Panne kann das Dichtmittel mit der Druckluft dabei vorteilhafterweise auch als eine Dichtmitteldispersion wie vorstehend beschrieben vorliegen, da durch das Leiten durch den Innenkanal genügend Druck aufgebaut werden kann. Je höher der Druck, mit dem die Druckluft in den Dichtmittelbehälter strömt, desto kleiner sind die Dichtmittelpartikel und desto besser ist die Abdichtungswirkung der Dichtmitteldispersion in dem pannenbehafteten Reifen.

Im Gegensatz zu dem vorstehend beschriebenen Leiten des Druckluftstromes durch den Innenkanal des bewegbaren Umschaltelements wäre es theoretisch auch möglich, dass die vom Gasanschluss kommende Druckluft das bewegbare Umschaltelement außerhalb des Umschaltelements umströmte, um in den Dichtmittelbehälter zu gelangen. Dies würde jedoch eine ungünstigere Strömung der Druckluft und des Dichtmittels bewirken, wodurch die Zeit zum Überführen des Dichtmittels in den Reifen mit der Panne unnötig erhöht wird. Auch dies ist ein Vorteil der Verwendung eines Innenkanals in einer erfindungsgemäßen Vorrichtung wie vorstehend beschrieben.

Besonders bevorzugt sollte daher der Innenkanal eines bewegbaren vorstehend beschriebenen Umschaltelements einer erfindungsgemäßen Vorrichtung frei von anderen Elementen wie beispielsweise einer Unterstützungseinheit (vgl. "support portion", Bezugszeichen 19, in Figur 3 und deren Figurenbeschreibung in EP2792473 A1) sein, welche bei der Verwendung in einer erfindungsgemäßen Vorrichtung nicht die vorstehend beschriebenen Vorteile aufweisen würde.

Besonders bevorzugt ist auch eine erfindungsgemäße Vorrichtung wie vorstehend beschrieben oder wie vorstehend als bevorzugt beschrieben und insbesondere wie vorstehend als besonders bevorzugt beschrieben, wobei
- ein erstes Dichtungselement im Zusammenwirken mit der Innenwand des Drucklufttransportkanals dazu eingerichtet ist, dass keine Druckluft vom Umgehungsabschnitt in den Aktivierungsabschnitt des Umschaltelements gelangt, und/oder
- das erste Dichtungselement und/oder ein zweites Dichtungselement im Zusammenwirken mit der Innenwand des Drucklufttransportkanals dazu eingerichtet ist, dass Druckluft vom Aktivierungsabschnitt und/oder von dem besagten weiteren Abschnitt ausschließlich durch den Innenkanal des Umschaltelements zum Dichtmittelanschluss geleitet wird.

Ein Vorteil des vorstehend beschriebenen Aspekts der vorliegenden Erfindung ist, dass ein zuverlässiges Umschalten vom Druckluftmodus in den Dichtmittelmodus in einer erfindungsgemäßen Vorrichtung erfolgt.

Bevorzugt ist eine erfindungsgemäße Vorrichtung wie vorstehend beschrieben oder wie vorstehend als bevorzugt beschrieben, wobei der Durchtrennungsabschnitt des Umschaltelements so am Umschaltelement angeordnet ist und dazu vorgesehen ist, aufgrund einer Bewegung des bewegbaren Umschaltelements in Richtung des Dichtmittelanschlusses ein Siegel am Dichtmittelanschluss oder ein Siegel an einem am Dichtmittelanschluss befestigten Dichtmittelbehälter zu durchtrennen.

Ein Vorteil des vorstehend beschriebenen Aspekts der vorliegenden Erfindung ist, dass das Umschalten vom Druckluftmodus in den Dichtmittelmodus ohne Umleiten des Druckluftstromes durch verschiedene Druckluftkanäle durchgeführt werden kann und durch den Druckluftstromes selbst bewerkstelligt wird. Insbesondere Letzteres erleichtert das Wissen und den Kraftaufwand, welches und welcher ein Anwender anwenden muss. Insbesondere gegenüber der "Push down"-Lösung wie in Dokument EP 2792473 A1 beschrieben (vgl. Figur 4 und deren Figurenbeschreibung) muss der Anwender bei der Verwendung einer erfindungsmäßen Vorrichtung nicht wissen, wie viel oder wie lange er einen bestimmten Kraftaufwand anwenden muss, da der Kraftaufwand zum Umschalten vom Druckluftmodus in den Dichtmittelmodus mittels des Druckluftstromes bewerkstelligt wird.

Bevorzugt ist eine erfindungsgemäße Vorrichtung wie vorstehend beschrieben oder wie vorstehend als bevorzugt beschrieben, wobei der Dichtmittelanschluss mit einem Siegel versiegelt ist, wobei das Siegel des Dichtmittelanschlusses dazu ausgelegt ist, bei einer mittels aus einer Druckluftquelle kommenden Druckluft ausgelösten Bewegung des bewegbaren Umschaltelements in Richtung des Dichtmittelanschlusses durchtrennt zu werden.

Bevorzugt ist eine erfindungsgemäße Vorrichtung wie vorstehend beschrieben oder wie vorstehend als bevorzugt beschrieben, wobei die Vorrichtung eine elektronisch oder manuell manipulierbare Halteeinheit zum Halten des bewegbaren Umschaltelements aufweist, wobei bevorzugt die Halteeinheit so eingerichtet ist, dass sie so manipuliert werden kann, dass das bewegbare Umschaltelement von der Halteeinheit gelöst werden kann und nach dem Lösen eine mittels Druckluft aus einer Druckluftquelle bewirkte Bewegung des bewegbaren Umschaltelements ausgelöst werden kann, wobei die bewirkte Bewegung besonders bevorzugt geeignet ist, ein Siegel am Anschluss eines am Dichtmittelanschluss befestigten Dichtmittelbehälters oder ein Siegel an dem Dichtmittelanschluss mittels dem Durchtrennungsabschnitt zum Durchtrennen eines Siegels zu durchtrennen.

Ein Vorteil des vorstehend beschriebenen Aspekts der vorliegenden Erfindung ist, dass lediglich unter einem geringen Kraftaufwand der Anwender die Halteeinheit lösen muss und die Halteeinheit nach dem Lösen durch die Kraft des Druckluftstromes aus dem Kompressor das Siegel durchtrennt und somit den Dichtmittelmodus auslöst. Eine manuell manipulierbare Halteeinheit ist nachstehend in Verbindung mit einem Auslöselement beschrieben. Eine elektronisch manipulierbare Halteeinheit kann beispielsweise durch einen entsprechenden Befehl einer Steuerungseinheit oder einer Regelungseinheit gelöst werden. Als Steuerungseinheit oder Regelungseinheit kann beispielsweise der Boardcomputer eines Fahrzeuges, an dem der pannenbehaftete Reifen befestigt ist, verwendet werden. Aufgrund des geringen benötigten Kraftaufwandes, um die Halteeinheit einer erfindungsgemäßen Vorrichtung wie vorstehend beschrieben oder wie vorstehend als bevorzugt beschrieben zu lösen, kann eine üblicherweise in einem Pannenhilfesystem folgende Spannungsquelle diesen Kraftaufwand problemlos bereitstellen.

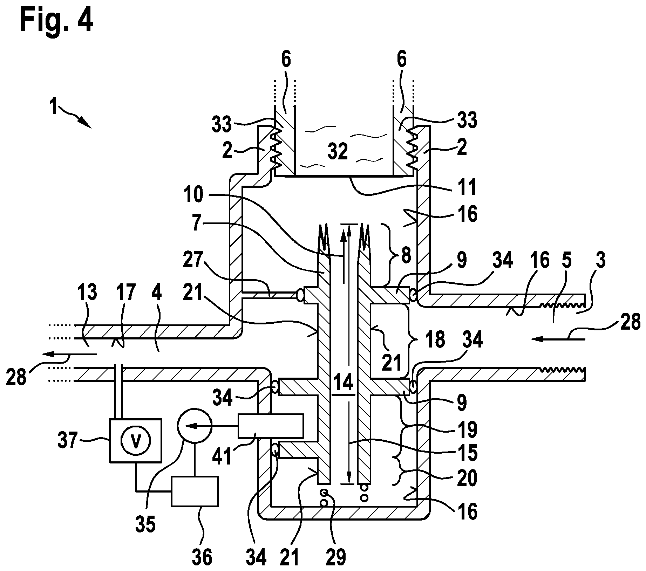

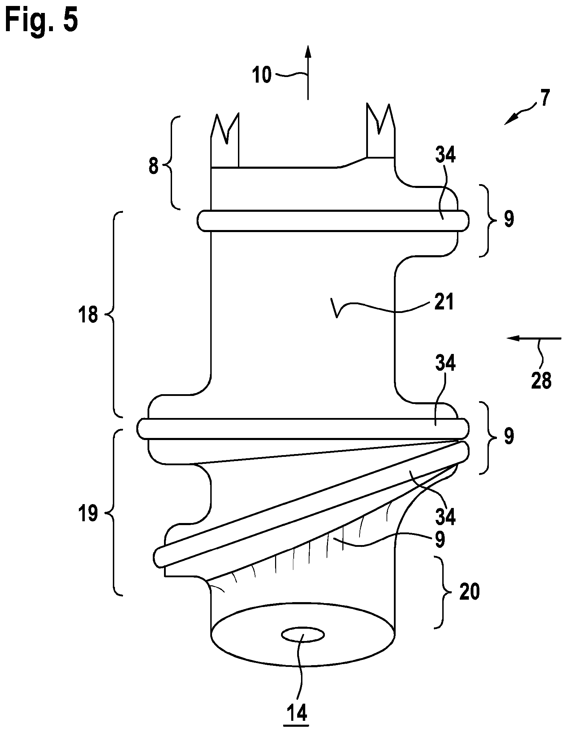

Dies stellt insbesondere einen Vorteil gegenüber dem Gegenstand des Dokumentes EP2792473 A1, siehe Figur 4 und deren Figurenbeschreibung dar, bei dem die gesamte Dichtmitteleinheit ("bottle unit 6", siehe [0044] sowie Figuren 4 und 5) bewegt werden muss, um vom Druckluftmodus in den Dichtmittelmodus zu schalten. Dies führt zu einem zuverlässigeren Abdichtverhalten bei Anwendung einer erfindungsgemäße Vorrichtung im Vergleich zu dem Gegenstand des Dokumentes EP2792473 A1.

Aufgrund der vorstehenden Ausführungen ist eine erfindungsgemäße Vorrichtung wie vorstehend als bevorzugt beschrieben oder ein erfindungsgemäßes System wie nachstehend beschrieben bevorzugt, wobei die Druckluftquelle mittels einer Spannungsquelle im Bereich von 5 bis 50 Volt angetrieben wird. Ein Beispiel einer solchen Spannungsquelle ist beispielsweise der Stromanschluss für einen Zigarettenanzünder eines herkömmlichen Fahrzeuges. In einer anderen Ausführungsform kann die Spannungsquelle 10 bis 15 Volt betragen.

Ganz besonders bevorzugt ist es hierbei, wenn die Halteeinheit in eine erfindungsgemäße Vorrichtung wie vorstehend beschrieben elektronisch manipuliert werden kann und die elektronische Manipulation von einer Steuerung- und/oder Regelungseinheit durchgeführt wird, welche Signale von einem Drucksensor zum Messen eines Innendruckes in einem pannenbehafteten Reifen auswertet, um die elektronische Manipulation der Halteeinheit einer erfindungsgemäßen Vorrichtung durchzuführen. Eine solche Steuerung- und/oder Regelungseinheit kann beispielsweise der Boardcomputer eines Fahrzeuges sein, welcher mit den Drucksensoren im Reifen verbunden ist und somit anwenderfreundlich das Umschalten vom Druckluftmodus in den Dichtmittelmodus selbstständig bewirkt.

Bevorzugt ist eine erfindungsgemäße Vorrichtung wie vorstehend beschrieben oder wie vorstehend als bevorzugt beschrieben, wobei die Vorrichtung eine elektronisch oder manuell manipulierbare Halteeinheit zum Halten des bewegbaren Umschaltelements in einer vordefinierten Ausgangsposition aufweist und die Halteeinheit bevorzugt so ausgestaltet ist, dass die Halteeinheit das bewegbare Umschaltelement während Umströmens des Umschaltelements mit Druckluft aus einer Druckluftquelle in der vordefinierten Ausgangsposition halten kann, wobei besonders bevorzugt die vordefinierte Ausgangsposition des bewegbaren Umschaltelements innerhalb des Drucklufttransportkanals und/oder am verteilerseitigen Ende des Drucklufttransportkanals ist.

Besonders bevorzugt ist eine erfindungsgemäße Vorrichtung wie vorstehend beschrieben oder wie vorstehend als bevorzugt beschrieben, wobei die Vorrichtung ein Auslöselement zum manuellen Lösen des Haltens der Halteeinheit und zum Bewirken einer Bewegung des bewegbaren Umschaltelements aus der Ausgangsposition hin zum Dichtmittelanschluss aufweist, wobei das Auslöselement, die Halteeinheit und das bewegbare Umschaltelement bevorzugt so eingerichtet sind, dass nach dem Lösen des Auslöselements eine mittels Druckluft aus einer Druckluftquelle bewirkte Bewegung des bewegbaren Umschaltelements ausgelöst werden kann und die bewirkte Bewegung geeignet ist, ein Siegel am Anschluss eines Dichtmittelbehälters oder ein Siegel an dem Dichtmittelanschluss zu durchtrennen. Vor dem Lösen des Auslöselements befindet sich das Umschaltelement dabei in der vordefinierten Ausgangsposition wie vorstehend beschrieben.

Ein Vorteil des vorstehend beschriebenen Aspekts der vorliegenden Erfindung ist, dass durch die Verwendung eines Auslöselement wie vorstehend beschrieben weniger Kraft aufgewendet werden muss, als wenn bei einer solchen Manipulation die Druckluftströme beim Umschalten vom Druckluftmodus in den Dichtmittelmodus unterbrochen oder umgeleitet werden müssen. Letztere Umschaltmechanismen mit Umleiten oder Unterbrechen der Druckluftströme sind beispielsweise in den Anmeldungen EP2810767 A1, siehe dort Figuren 2 bis 6 und deren Figurenbeschreibungen, und EP2792473 A1, siehe dort Figuren 2 bis 6 und deren Figurenbeschreibungen, bekannt. Der vorstehend beschriebene Aspekt der vorliegenden Erfindung hat somit einen technischen Vorteil gegenüber den beiden vorstehend beschriebenen Schriften, auch weil bei einer erfindungsgemäßen Vorrichtung nicht mehrere Teile auf komplizierte Weise mit einander verbunden werden müssen. Dies erleichtert die Anwendung eines Pannenhilfesystems durch den Anwender, dass das Umschalten leichter ist und weniger fehleranfällig.

Im Rahmen der vorliegenden Erfindung könnte ein vorstehend beschriebenes Auslöselement beispielsweise ein Stecker zum Herausziehen wie bei einer Granate sein. Ein solcher Stecker würde dem Anwender aufgrund der Ähnlichkeit zum Granatauslöser zudem intuitiv vermitteln, wie er diesen Stecker zu bedienen hat.

Besonders bevorzugt ist auch eine erfindungsgemäße Vorrichtung wie vorstehend als besonders bevorzugt beschrieben, wobei das vorstehend beschriebene Auslöselement bevorzugt so ausgestaltet ist, dass das Lösen des Haltens der Halteeinheit durch Drehen eines Dichtmittelbehälter im oder in den Dichtmittelanschluss einer erfindungsgemäßen Vorrichtung wie vorstehend beschrieben oder wie vorstehend als bevorzugt beschrieben oder durch Drehen des Dichtmittelanschlusses einer erfindungsgemäßen Vorrichtung wie vorstehend beschrieben oder wie vorstehend als bevorzugt beschrieben ausgelöst wird. Bei dem besagten Drehen wird die Dichtmittelflasche bevorzugt von einer horizontalen in eine vertikale Position gedreht, sodass der Dichtmittelbehälter nach dem Drehen kopfüber angeordnet ist.

Ein Vorteil des vorstehend beschriebenen Aspekts der vorliegenden Erfindung ist, dass durch die Anordnung des Dichtmittelbehälter in der Position "kopfüber" das Überführen des Dichtmittels aus dem Dichtmittelbehälter durch den Dichtmitteltransportkanal einer erfindungsgemäßen Vorrichtung noch zuverlässiger gewährleistet werden kann.

Im Rahmen der vorliegenden Erfindung bedeutet der Ausdruck "kopfüber" insbesondere, dass der Dichtmittelbehälter so angeordnet ist, dass der vom Dichtmittelbehälter umfasste Verbindungsanschluss zum Verbinden mit dem Dichtmittelanschluss einer erfindungsgemäßen Vorrichtung nach unten zeigt und das Gewicht des Dichtmittels im Dichtmittelbehälter bevorzugt aufgrund seiner Gewichtskraft auf den Verbindungsanschluss oder auf ein Siegel drückt und somit das Dichtmittel bei gebrochenem Siegel aus dem Dichtmittelbehälter aufgrund seiner Gewichtskraft hinausfließt. Hierbei sollte der Dichtmittelanschluss einer erfindungsmäßen Vorrichtung stets so angeordnet sein, dass der mit dem Dichtmittelanschluss zu verbindende Anschluss des Dichtmittelbehälters stets unterhalb des restlichen Dichtmittelbehälter nach dem verbinden mit dem Dichtmittelanschluss angeordnet ist.

Bevorzugt ist eine erfindungsgemäße Vorrichtung wie vorstehend beschrieben oder wie vorstehend als bevorzugt beschrieben, wobei die Vorrichtung eine Stoppeinheit zum Stoppen der Bewegung des Umschaltelements aufweist, wobei die Stoppeinheit bevorzugt so in der Vorrichtung angebracht ist, dass das Umschaltelement erst nach dem Durchtrennen mindestens eines Siegels und nach dem Leiten von Druckluft durch den Innenkanal des Umschaltelements zum Dichtmittelanschluss gestoppt wird.

Ein Vorteil des vorstehend beschriebenen Aspekts der vorliegenden Erfindung ist, dass die Stoppeinheit verhindert, dass das bewegbare Umschaltelement den Dichtmittelanschluss der erfindungsgemäßen Vorrichtung teilweise oder gänzlich blockiert und somit das Überführen des Dichtmittels aus dem Dichtmittelbehälter in den Reifen verlangsamt oder verhindert.

Bevorzugt ist eine erfindungsgemäße Vorrichtung wie vorstehend beschrieben oder wie vorstehend als bevorzugt beschrieben, wobei der Drucklufttransportkanal zylinderförmig ausgebildet ist und einen Innendurchmesser und einen Außendurchmesser aufweist und/oder wobei die Vorrichtung ein Federelement zum Beschleunigen des bewegbaren Umschaltelements in Richtung des Dichtmittelanschlusses aufweist, wobei das Federelement so ausgebildet ist, dass nach dem Lösen des Auslöselements oder nach einer geeigneten Manipulation des Umschaltelements das Federelement eine Beschleunigung des bewegbaren Umschaltelements in Richtung Dichtmittelanschluss bewirkt.

Ein Vorteil des vorstehend beschriebenen Aspekts der vorliegenden Erfindung ist, dass auch bei geringeren Druckluftströmungen, welche eine unzureichende Kraft zum Durchtrennen des Siegels mittels des Durchtrennungsabschnittes des Umschaltelements bewirken, eine zum Durchtrennen des Siegels ausreichten Bewegung des Umschaltelements im Vergleich zu einer erfindungsgemäßen Vorrichtung ohne Federelement gewährleistet werden kann. Solche verringerten Druckluftströme treten insbesondere bei einer falschen Bedienung des Pannenhilfesystems auf. Daher hat das vorstehend beschriebene Federelement zudem den Vorteil, dass die Bedienung durch den Anwender des Pannenhilfesystems erleichtert wird.

Ein Beispiel eines solchen Federelements wie vorstehend beschrieben ist beispielsweise eine Feder mit einem kleineren Außendurchmesser als der Innendurchmesser des Drucklufttransportkanals, sodass die Feder unterhalb des bewegbaren Umschaltelements in den Drucklufttransportkanal angebracht werden kann und nach dem Lösen der Halteeinheit eine Bewegung des bewegbaren Umschaltelements in Richtung Dichtmittelanschluss unterstützt. Alternativ ist es natürlich auch möglich, dass ein vorstehend beschriebenes Federelement auch ohne Mithilfe der Druckluft aus der Druckluftquelle eine Bewegung des bewegbaren Umschaltelements in Richtung des Dichtmittelanschluss bewirkt, wobei die besagte Bewegung mittels des Federelement ausreicht, um mittels des Durchtrennungsabschnittes des Umschaltelements ein Siegel zu durchtrennen.

In besonders hohem Maße bevorzugt ist eine erfindungsgemäße Vorrichtung wie vorstehend beschrieben, umfassend
- mindestens eine Vorrichtung zum Transportieren von Druckluft und/oder Dichtmittel in einen Fahrzeugluftreifen,
- Verbindungsmittel zum Verbinden des reifenseitigen Endes des Dichtmitteltransportkanals mit einem eine Panne aufweisenden Reifen,
- mindestens eine Druckluftquelle, wobei die Druckluftquelle ein Kompressor ist und mindestens einen Hubkolbenverdichter mit einem Zylinder und mit einem Hubkolben sowie mindestens einen Motor zum Bewegen des Hubkolbens in dem Zylinder des Hubkolbenverdichters aufweist,
   und
- mindestens einen Dichtmittelbehälter mit Dichtmittel,
wobei
- die Vorrichtung mit der Druckluftquelle über den Gasanschluss, mit dem Dichtmittelbehälter über den Dichtmittelanschluss und mit den Verbindungsmitteln einsatzbereit verbunden ist und die Vorrichtung, die Druckluftquelle und der Dichtmittelbehälter in einem einzigen Gehäuse angeordnet sind, wobei das Gehäuse so ausgebildet ist, dass es im Betrieb so aufgestellt werden kann, dass der Dichtmittelbehälter kopfüber im System angeordnet ist,
- die Vorrichtung umfasst:
   - mindestens einen Gasanschluss zur Verbindung mit mindestens einer Druckluftquelle,
   - mindestens einen Dichtmittelanschluss zur Verbindung mit mindestens einem Dichtmittelbehälter,
   - mindestens zwei Kanäle, wobei ein erster Kanal ein Dichtmitteltransportkanal zum Transportieren einer Dichtmitteldispersion vom Dichtmittelanschluss in einen Fahrzeugluftreifen ist und ein zweiter Kanal ein Drucklufttransportkanal zum Transportieren von Druckluft zum Dichtmittelanschluss oder zum Dichtmitteltransportkanal ist, wobei die Dichtmitteldispersion Dichtmittelpartikel und als Dispersionsmatrix Druckluft umfasst,
   wobei
   - die Vorrichtung ein bewegbares Umschaltelement aufweist, wobei das bewegbare Umschaltelement in Richtung des Dichtmittelanschluss mittels eines vom Gasanschluss kommenden Druckluftstromes bewegt werden kann und einen Durchtrennungsabschnitt zum Durchtrennen eines Siegels aufweist,
   - der Durchtrennungsabschnitt des Umschaltelements dazu eingerichtet ist, aufgrund der Bewegung des bewegbaren Umschaltelements in Richtung des Dichtmittelanschluss ein Siegel am Dichtmittelanschluss oder ein Siegel an einem am Dichtmittelanschluss befestigten Dichtmittelbehälter zu durchtrennen,
   - das bewegbare Umschaltelement im Drucklufttransportkanal angeordnet ist und/oder ein, zwei, drei vier, fünf oder mehr als fünf Luftstrombrechungselemente aufweist, wobei das eine oder jedes Luftstrombrechungselement geeignet ist, zumindest
   teilweise die im Wesentlichen zur Bewegungsrichtung des Umschaltelements parallel verlaufenden Strömungsrichtung von Druckluft im Drucklufttransportkanal so abzulenken, dass im Drucklufttransportkanal das bewegbare Umschaltelement mittels aus einer Druckluftquelle kommenden Druckluft in Richtung des Dichtmittelanschluss zu bewegen,
- die Vorrichtung eine manuell manipulierbare Halteeinheit zum Halten des bewegbaren Umschaltelements in einer vordefinierten Ausgangsposition aufweist, wobei die Halteeinheit so manipuliert werden kann, dass das bewegbare Umschaltelement von der Halteeinheit gelöst werden kann und nach dem Lösen eine mittels Druckluft aus einer Druckluftquelle bewirkte Bewegung des bewegbaren Umschaltelements ausgelöst werden kann, wobei die vordefinierte Ausgangsposition des bewegbaren Umschaltelements innerhalb des Drucklufttransportkanals und/oder am verteilerseitigen Ende des Drucklufttransportkanals ist,
- die Vorrichtung ein Auslöselement zum manuellen Lösen des Haltens der Halteeinheit einer Bewegung des bewegbaren Umschaltelements aus der Ausgangsposition hin zum Dichtmittelanschluss aufweist, wobei nach dem Lösen eine mittels Druckluft aus einer Druckluftquelle die besagte bewirkte Bewegung des bewegbaren Umschaltelements ausgelöst werden kann, wobei die besagte bewirkte Bewegung geeignet ist, ein Siegel am Anschluss eines Dichtmittelbehälters oder ein Siegel an dem Dichtmittelanschluss zu durchtrennen,
- das bewegbare Umschaltelement zumindest im Wesentlichen in Form eines Hohlzylinders ausgebildet ist und einen Innenkanal aufweist, wobei das Umschaltelement entlang der Höhenerstreckung des Hohlzylinders im Zusammenwirken mit der Innenwand des Drucklufttransportkanals die folgenden drei mittels Strombrechungselemente und/oder Dichtungselemente getrennte Abschnitte bildet:
   - einen Umgehungsabschnitt zum Leiten von Druckluft vom Drucklufttransportkanal direkt in den Dichtmitteltransportkanal und
   - einen Aktivierungsabschnitt, wobei der Aktivierungsabschnitt dazu eingerichtet ist, vom Gasanschluss kommende Druckluft zum Bewegen des Umschaltelements in Richtung des Dichtmittelanschlusses zu verwenden
      und
   - einen weiteren Abschnitt, welcher so ausgeformt ist, dass vom Gasanschluss kommende Druckluft durch den Innenkanal des Umschaltelements in Form eines Hohlzylinders und anschließend in Richtung des Dichtmittelanschlusses oder in einen Dichtmittelbehälter geleitet wird,
   - ein erstes Dichtungselement im Zusammenwirken mit der Innenwand des Drucklufttransportkanals dazu eingerichtet ist, dass keine Druckluft vom Umgehungsabschnitt in den Aktivierungsabschnitt des Umschaltelements gelangt,
      und
   - das erste Dichtungselement im Zusammenwirken mit der Innenwand des Drucklufttransportkanals dazu eingerichtet ist, dass nach dem Lösen des Halteelements Druckluft vom Aktivierungsabschnitt oder von dem besagten weiteren Abschnitt ausschließlich durch den Innenkanal des Umschaltelements zum Dichtmittelanschluss geleitet wird,
- die Vorrichtung eine Stoppeinheit zum Stoppen der Bewegung des Umschaltelements aufweist, wobei die Stoppeinheit so in der Vorrichtung angebracht ist, dass das Umschaltelement erst nach dem Durchtrennen mindestens eines Siegels und nach dem Leiten von Druckluft durch den Innenkanal des Umschaltelements zum Dichtmittelanschluss gestoppt wird,
   und
- der Drucklufttransportkanal zylinderförmig ausgebildet ist und einen Innendurchmesser und einen Außendurchmesser aufweist und wobei die Vorrichtung ein Federelement zum Beschleunigen des bewegbaren Umschaltelements in Richtung Dichtmittelanschluss aufweist, wobei das Federelement so ausgebildet ist, dass nach dem Lösen des Halteelements das Federelement eine Beschleunigung des bewegbaren Umschaltelements in Richtung Dichtmittelanschluss bewirkt.

Die vorstehend beschriebenen vorteilhaften Aspekte einer erfindungsgemäßen Vorrichtung zum Transportieren von Druckluft und/oder Dichtmittel in einen Fahrzeugluftreifen gelten auch für sämtliche Aspekte eines nachstehend beschriebenen tragbaren/transportablen Systems zum Abdichten und Aufpumpen von Fahrzeugluftreifen und die nachstehend diskutierten vorteilhaften Aspekte erfindungsgemäßer tragbarer/transportabler Systeme gelten entsprechend für sämtliche Aspekte einer erfindungsgemäßen Vorrichtung zum Transportieren von Druckluft und/oder Dichtmittel in einen Fahrzeugluftreifen.

Die Erfindung betrifft auch ein tragbares/transportables System zum Abdichten und Aufpumpen von Fahrzeugluftreifen, umfassend
- mindestens eine Vorrichtung nach einem der vorangehenden Ansprüche,
- Verbindungsmittel zum Verbinden des reifenseitigen Endes des Dichtmitteltransportkanals mit einem eine Panne aufweisenden Reifen,
- mindestens eine Druckluftquelle, wobei die Druckluftquelle bevorzugt ein Kompressor ist und bevorzugt
   - mindestens einen Hubkolbenverdichter mit einem Zylinder und mit einem Hubkolben sowie
   - mindestens einen Motor zum Bewegen des Hubkolbens in dem Zylinder des Hubkolbenverdichters
   aufweist,
   und optional
- mindestens einen Dichtmittelbehälter mit Dichtmittel und/oder mindestens ein Manometer zum Messen den Reifeninnendrucks eines mit den Verbindungsmitteln verbundenden Reifens.

Im Rahmen der vorliegenden Erfindung werden die Ausdrücke "tragbares/transportables System zum Abdichten und Aufpumpen von Fahrzeugluftreifen" und "Pannenhilfesystem" synonym verwendet.

Bevorzugt ist ein System wie vorstehend beschrieben, wobei der Dichtmittelbehälter ein Aspekt Verhältnis von der Breite zur Höhe des Dichtmittelbehälters im Bereich von 1:1 bis 20:1 aufweist, bevorzugt im Bereich von 2:1 bis 20:1, bevorzugt im Bereich von 5:1 bis 10:1, bevorzugt im Bereich von 1,4:1 bis 3: 1, wobei die Höhe entlang der Mittelachse des für einen Anschluss mit einem Dichtmittelanschluss einer erfindungsgemäßen Vorrichtung vorgesehenen Verbindungsanschluss des Dichtmittelbehälters bis zur dem Verbindungsanschluss gegenüberliegenden Dichtmittelbehälterwand verläuft und die Breite des Dichtmittelbehälters senkrecht zu der besagten Höhe verläuft.

Bevorzugt ist ein erfindungsgemäßes System wie vorstehend beschrieben oder wie vorstehend als bevorzugt beschrieben, wobei die Vorrichtung mit der Druckluftquelle über den Gasanschluss, mit dem Verbindungsanschluss des Dichtmittelbehälters über den Dichtmittelanschluss und mit den Verbindungsmitteln einsatzbereit verbunden ist und/oder die Vorrichtung, die Druckluftquelle und optional der Dichtmittelbehälter in einem einzigen Gehäuse angeordnet sind, wobei das Gehäuse so ausgebildet ist, dass es im Betrieb so aufgestellt werden kann, dass der Dichtmittelbehälter im Gehäuse kopfüber im System angeordnet ist.

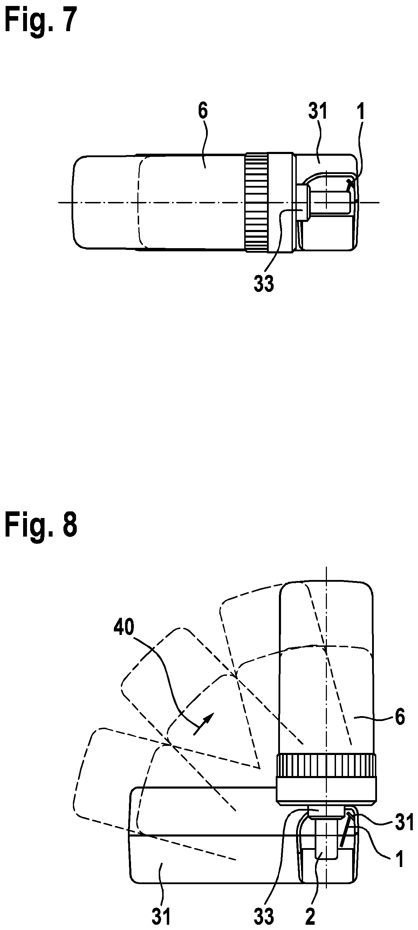

Ein Vorteil des vorstehend beschriebenen Aspekts der vorliegenden Erfindung ist, dass eine im Wesentlichen vollständige Entleerung des Dichtmittelbehälters erreicht wird. Dies kann beispielsweise durch ein Verlagern des Behälters aus horizontaler Lage in vertikale Lage geschehen (siehe Figuren 7 und 8) oder dadurch erreicht werden, dass der Dichtmittelanschluss so an einer erfindungsmäßen Vorrichtung angebracht ist, dass der mit dem Dichtmittelanschluss zu verbindende Verbindungsanschluss des Dichtmittelbehälter stets unterhalb des restlichen Dichtmittelbehälter angeordnet ist.

Bevorzugt ist ein erfindungsgemäßes System wie vorstehend beschrieben oder wie vorstehend als bevorzugt beschrieben, wobei der Durchtrennungsabschnitt des Umschaltelements dazu vorgesehen ist, aufgrund einer Bewegung des bewegbaren Umschaltelements in Richtung des Dichtmittelanschlusses ein Siegel an dem am Dichtmittelanschluss befestigten Dichtmittelbehälter zu durchtrennen, wobei das Siegel an dem am Dichtmittelanschluss befestigten Dichtmittelbehälter dazu ausgelegt ist, bei einer mittels aus einer Druckluftquelle kommenden Druckluft ausgelösten Bewegung des bewegbaren Umschaltelements in Richtung des Dichtmittelanschlusses durchtrennt zu werden.

Die vorstehend beschriebenen vorteilhaften Aspekte erfindungsgemäßer tragbarer/transportabler Systeme und einer erfindungsgemäßen Vorrichtung zum Transportieren von Druckluft und/oder Dichtmittel in einen Fahrzeugluftreifen gelten auch für sämtliche Aspekte nachstehend beschriebener Verfahren und die nachstehend diskutierten vorteilhaften Aspekte erfindungsgemäßer Verfahren gelten entsprechend für sämtliche Aspekte einer erfindungsgemäßer tragbarer/transportabler Systeme und einer erfindungsgemäßen Vorrichtung zum Transportieren von Druckluft und/oder Dichtmittel in einen Fahrzeugluftreifen.

Die Erfindung betrifft auch ein Verfahren zum Abdichten und/oder Aufpumpen von Fahrzeugluftreifen, umfassend die folgenden Schritte:
A) Bereitstellen eines Systems wie vorstehend beschrieben oder wie vorstehend als bevorzugt beschrieben mit einem Dichtmittelbehälter mit Dichtmittel und eines Fahrzeugluftreifens mit einer Panne, wobei die Panne bevorzugt zum Abdichten mittels eines Systems wie vorstehend beschrieben oder wie vorstehend als bevorzugt beschrieben geeignet ist,
B) Verbinden des Dichtmitteltransportkanals des Systems mit dem Fahrzeugluftreifen mit der Panne mittels der Verbindungsmittel des Systems,
C) Bewegen des bewegbaren Umschaltelements in Richtung des Dichtmittelanschluss mittels Druckluft aus der Druckluftquelle, wobei die Bewegung bevorzugt mittels Lösens des Haltens der Halteeinheit ausgelöst wird,
D) Verwendung eines vorstehend beschriebenen oder vorstehend als bevorzugt beschriebenen Systems zum Pumpen von aus der Druckluftquelle kommenden Druckluft in eine Vorrichtung wie vorstehend beschrieben oder wie vorstehend als bevorzugt beschrieben oder wie vorstehend als besonders bevorzugt beschrieben,
E) Durchtrennen eines Siegels am Dichtmittelanschluss und/oder am Dichtmittelbehälter, sodass Dichtmittel aus dem Dichtmittelbehälter in den Dichtmitteltransportkanal gelangen kann,
F) Zuführen von Dichtmittel aus dem Dichtmittelbehälter in den Fahrzeugluftreifen mittels der Druckluft aus der Druckluftquelle, sodass die Panne am Fahrzeugluftreifen mittels des in den Fahrzeugluftreifen beförderten Dichtmittels zumindest teilweise abgedichtet wird,
G) Optionales Erhöhen des Reifeninnendrucks des Fahrzeugluftreifens mit der Panne bis auf einen Mindestdruck, bevorzugt auf mindestens 1 bar, wobei Druckluft und Dichtmittel aus dem vorstehend beschriebenen oder vorstehend als bevorzugt beschriebenen System in den Fahrzeugluftreifen gepumpt wird.

Bevorzugt ist ein erfindungsgemäßes Verfahren wie vorstehend beschrieben oder wie vorstehend als bevorzugt beschrieben, wobei das bewegbare Umschaltelement zumindest im Wesentlichen in Form eines Hohlzylinders ausgebildet ist und einen Innenkanal sowie einen Durchtrennungsabschnitt zum Durchtrennen eines Siegels aufweist, wobei das Umschaltelement entlang der Höhenerstreckung des Hohlzylinders im Zusammenwirken mit der Innenwand des Drucklufttransportkanals mindestens einen Abschnitt bildet, wobei der mindestens eine Abschnitt zumindest einen Umgehungsabschnitt zum Leiten von Druckluft vom Drucklufttransportkanal in den Dichtmitteltransportkanal umfasst, wobei
- in Schritt C) das Erhöhen des Reifeninnendrucks des Fahrzeugluftreifens mit der Panne so erfolgt, dass Druckluft vom Drucklufttransportkanal durch den Umgehungsabschnitt geleitet wird, und
- das Durchtrennen in Schritt E) mittel des Durchtrennungsabschnittes des bewegbaren Umschaltelements erfolgt.

Die Vorteile des vorstehend beschriebenen Aspekts der vorliegenden Erfindung sind vorstehend in Bezug auf die erfindungsgemäße Vorrichtung oder auf das erfindungsgemäße System erklärt.

Bevorzugt ist ein erfindungsgemäßes Verfahren wie vorstehend beschrieben oder wie vorstehend als bevorzugt beschrieben, wobei das Umschaltelement entlang der Höhenerstreckung des Hohlzylinders im Zusammenwirken mit der Innenwand des Drucklufttransportkanals mindestens einen weiteren Abschnitt bildet und in Schritt F) vom Gasanschluss kommende Druckluft durch den Innenkanal des Umschaltelements in Form eines Hohlzylinders und anschließend in den Dichtmittelbehälter geleitet und zusammen mit Dichtmittel aus dem Dichtmittelbehälter in den Fahrzeugluftreifen befördert wird.

Die Vorteile des vorstehend beschriebenen Aspekts der vorliegenden Erfindung sind vorstehend in Bezug auf die erfindungsgemäße Vorrichtung oder auf das erfindungsgemäße System erklärt.

Die Erfindung betrifft auch ein Verfahren zum Aufpumpen von Fahrzeugluftreifen, umfassend die folgenden Schritte:
A) Bereitstellen eines vorstehend beschriebenen oder vorstehend als bevorzugt beschriebenen Systems und eines Fahrzeugluftreifens,
B) Verbinden des Dichtmitteltransportkanals des Systems mit dem Fahrzeugluftreifen,
C) Verwendung eines vorstehend beschriebenen oder vorstehend als bevorzugt beschriebenen Systems zum Erhöhen des Reifeninnendrucks des Fahrzeugluftreifens bis auf einen Mindestdruck, bevorzugt auf den vom Fahrzeughersteller vorgegebenen Reifeninnendruck, wobei Druckluft aus der Druckluftquelle des vorstehend beschriebenen oder vorstehend als bevorzugt beschriebenen Systems durch eine Vorrichtung wie vorstehend beschrieben oder wie vorstehend als bevorzugt beschrieben oder wie vorstehend als besonders bevorzugt beschrieben in den Fahrzeugluftreifen gepumpt wird

Die Vorteile des vorstehend beschriebenen Aspekts der vorliegenden Erfindung sind vorstehend in Bezug auf die erfindungsgemäße Vorrichtung oder auf das erfindungsgemäße System erklärt.

Die vorstehend beschriebenen vorteilhaften Aspekte erfindungsgemäßer tragbarer/transportabler Systeme und einer erfindungsgemäßen Vorrichtung zum Transportieren von Druckluft und/oder Dichtmittel in einen Fahrzeugluftreifen und eines der erfindungsgemäßen Verfahren gelten auch für sämtliche Aspekte nachstehend beschriebener Verwendungen und die nachstehend diskutierten vorteilhaften Aspekte erfindungsgemäßer Verwendungen gelten entsprechend für sämtliche Aspekte erfindungsgemäßer tragbarer/transportabler Systeme und einer erfindungsgemäßen Vorrichtung zum Transportieren von Druckluft und/oder Dichtmittel in einen Fahrzeugluftreifen und eines der erfindungsgemäßen Verfahren.

Die Erfindung betrifft auch eine Verwendung eines vorstehend beschriebenen oder vorstehend als bevorzugt beschriebenen Systems
- zum Aufpumpen von Fahrzeugluftreifen
   und/oder
- zum Abdichten von Fahrzeugluftreifen.

Die Erfindung betrifft auch eine Verwendung
- eines Auslöselement zur Verwendung in einer Vorrichtung wie vorstehend beschrieben oder wie vorstehend als bevorzugt beschrieben oder wie vorstehend als besonders bevorzugt beschrieben
zum Auslösen einer Bewegung eines bewegbaren Umschaltelements der Vorrichtung mittels aus einer Druckluftquelle kommenden Druckluft, wobei der Durchtrennungsabschnitt des bewegbaren Umschaltelements bevorzugt ein Siegel an dem Dichtmittelanschluss und/oder ein Siegel an einem Dichtmittelbehälter durchtrennt.

### Figurenbeschreibung:

### Es zeigt:

- Figur 1:: Querschnitt auf einer schematisch dargestellten erfindungsgemäßen Vorrichtung mit einem bewegbaren Umschaltelement zum Durchtrennen eines Siegels im Drucklufttransportkanal der erfindungsgemäßen Vorrichtung, wobei Druckluft durch den Umgehungsabschnitt des bewegbaren Umschaltelements in den Dichtmitteltransportkanal geleitet wird;
- Figur 2:: Querschnitt auf einer schematisch dargestellten erfindungsgemäßen Vorrichtung mit einem bewegbaren Umschaltelement zum Durchtrennen eines Siegels im Drucklufttransportkanal der erfindungsgemäßen Vorrichtung, wobei nach dem Entfernen des Auslöselements und nach der Beschleunigung durch die Feder Druckluft in den Aktivierungsabschnitt des bewegbaren Umschaltelements geleitet;
- Figur 3:: Querschnitt auf einer schematisch dargestellten erfindungsgemäßen Vorrichtung mit einem bewegbaren Umschaltelement zum Durchtrennen eines Siegels im Drucklufttransportkanal der erfindungsgemäßen Vorrichtung, wobei Druckluft durch den Innenkanal des Umschaltelements in den Dichtmittelbehälter mit Dichtmittel geleitet wird;
- Figur 4:: eine schematische Darstellung eines Querschnitts einer erfindungsgemäßen Vorrichtung mit einem bewegbaren Umschaltelement umfassend einen Durchtrennungsabschnitt zum Durchtrennen eines am Verbindungsanschluss eines Dichtmittelbehälters angebrachten Siegels;
- Figur 5:: ein bewegbares Umschaltelement einer erfindungsgemäßen Vorrichtung wie aus Figur 4 zu sehen, jedoch perspektivisch aus der Froschperspektive;
- Figur 6:: eine perspektivische Darstellung ein erfindungsgemäßes System zum Abdichten und Aufpumpen von Fahrzeugluftreifen, wobei ein Teil des einteiligen Gehäuses mittels gepunktete Linien nur angedeutet dargestellt ist, um die einzelnen Komponenten des Systems besser zu erkennen;
- Fig. 7 & 8:: eine weitere Ausführungsform eines erfindungsgemäßen Systems in einem einzigen Gehäuse aus einer Seitenansicht, wobei der Dichtmittelbehälter sich für einen einfachen Austausch außerhalb des Gehäuses befindet.

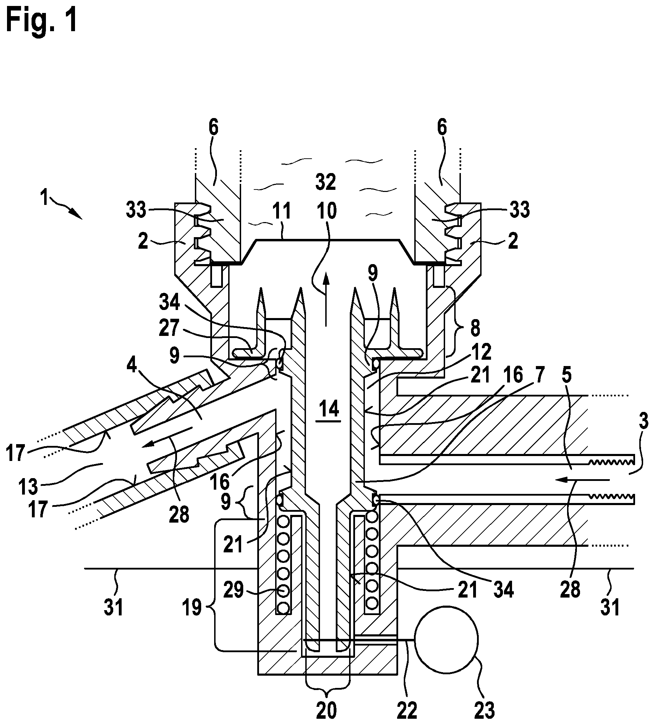

Figur 1 zeigt eine schematische Darstellung eines Teils eines Querschnittes eines erfindungsgemäßen Systems 38 umfassend eine erfindungsgemäße Vorrichtung 1 mit einem bewegbaren Umschaltelement 7 umfassend einen Durchtrennungsabschnitt 8 zum Durchtrennen eines Siegels 11, wobei das bewegbare Umschaltelement 7 im Drucklufttransportkanal 5 der erfindungsgemäßen Vorrichtung 1 in einer vordefinierten Ausgangsposition ist. Die in Figur 1 gezeigte Vorrichtung 1 umfasst einen Gasanschluss 3 zur Verbindung mit einer Druckluftquelle, einen Dichtmittelanschluss 2 zur Verbindung mit einem Dichtmittelbehälter 6, zwei Kanäle 5, 4, wobei ein erster Kanal ein Dichtmitteltransportkanal 4 zum Transportieren einer Dichtmitteldispersion vom Dichtmittelanschluss 2 in einen Fahrzeugluftreifen ist und ein zweiter Kanal ein Drucklufttransportkanal 5 zum Transportieren von Druckluft zum Dichtmittelanschluss 2 oder zum Dichtmitteltransportkanal 4 ist, wobei die Vorrichtung 1 ein bewegbares Umschaltelement 7 aufweist, wobei das bewegbare Umschaltelement 7 der mittels eines vom Gasanschluss 3 in Strömungsrichtung 28 strömenden Druckluftstromes bewegt werden kann und einen Durchtrennungsabschnitt 8 zum Durchtrennen eines Siegels 11 aufweist. Das bewegbare Umschaltelement 7 weist dabei die Form eines Hohlzylinders und daher auch einen Innenkanal 14 auf, wobei das Umschaltelement 7 entlang der Höhenerstreckung 15 im Zusammenwirken mit der Innenwand 16 des Drucklufttransportkanals 6 mehrere Abschnitte bildet, wobei die mehreren Abschnitte die folgenden Abschnitte umfassen: einen Umgehungsabschnitt 18 zum Leiten von Druckluft vom Drucklufttransportkanal 5 direkt in den Dichtmitteltransportkanal 4 und einen Aktivierungsabschnitt 19, wobei der Aktivierungsabschnitt 19 dazu eingerichtet ist, vom Gasanschluss 3 kommende Druckluft zum Bewegen des Umschaltelements 7 in Richtung des Dichtmittelanschlusses 2 zu verwenden, und einen weiteren Abschnitt 20, wobei der weitere Abschnitt 20 so ausgeformt ist, dass vom Gasanschluss 3 kommende Druckluft durch den Innenkanal 14 des Umschaltelements 7 in Bewegungsrichtung 10 zum Dichtmittelanschlusses 2 oder in einen Dichtmittelbehälter 6 geleitet werden kann. Die verschiedenen Abschnitte 8, 18, 19 werden in der in Figur 1 gezeigten Ausführungsform mittels Luftstrombrechungselementen 9 umfassend O-Ringe 34 voneinander abgegrenzt. In Figur 1 ist gezeigt das das Umschaltelement 7 am verteilerseitigen Ende 12 des Drucklufttransportkanals 5 angeordnet ist. Die in Figur 1 gezeigte Ausführungsform einer erfindungsgemäßen Vorrichtung 1 befindet sich im vorstehend beschriebenen Druckluftmodus, da Druckluft vom Gasanschluss 3 direkt zum reifenseitigen Ende 13 des Dichtmitteltransportkanals 4, indem die Druckluft vom Gasanschluss 3 durch den Zwischenraum zwischen der Innenwand 16 und der Außenwand 21 des Umschaltelements 7 um das Umschaltelement 7 herum geleitet wird und am verteilerseitigen Ende des Dichtmitteltransportkanals 4 in den Dichtmitteltransportkanal 4 in Strömungsrichtung 28 weiter zum reifenseitigen Ende 13 geleitet wird. Wie in Figur 1 gezeigt befindet sich das Dichtmittel 32 während des Druckluftmodus noch hinter dem verschlossenen Siegel 11 in dem mittels des Verbindungsanschluss 33 angeschlossenen Dichtmittelbehälter 6. Aufgrund der Übersichtlichkeit sind in Figur 1 weder die Verbindungsmittel zum Verbinden des reifenseitigen Endes des Dichtmitteltransportkanals mit einem eine Panne aufweisenden Reifen noch die Druckluftquelle, wohl aber ein Teil des einteiligen Gehäuses 31 gezeigt.

In Figur 1 ist zu sehen, dass die Luftstrombrechungselemente 9 den Umgehungsabschnitt 18 des Umschaltelements 7 so abdichten, dass die Druckluft vom Gasanschluss 3 direkt in den Dichtmitteltransportkanal 4 geleitet wird. Dabei wird das bewegbare Umschaltelement 7 mittels einer manuell manipulierbaren Halteeinheit 22 festgehalten, welche in Figur 1 beispielhaft durch einen so genannten Sicherungspinstift dargestellt ist. Die Öse 23 des Sicherungspins dient dabei als Beispiel eines Auslöselements 23 zum manuellen Lösen des Haltens der Halteeinheit 22. Dadurch, dass der Stift 22 des Sicherungspins das bewegbare Umschaltelement 7 in der vordefinierten Ausgangsposition wie in Figur 1 gezeigt hält, bleibt die Feder 29 gespannt und kann das bewegbare Umschaltelement nicht in die Bewegungsrichtung 10 beschleunigen.

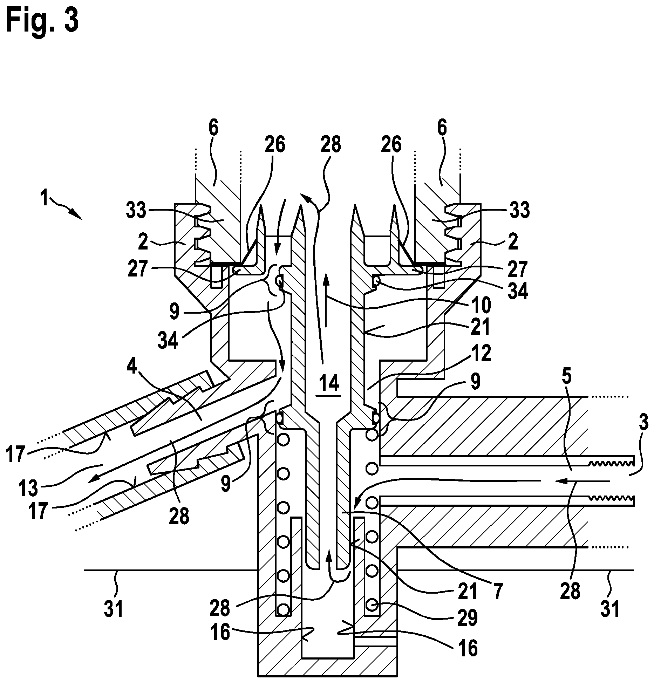

Des Weiteren sind in Figur 1 Stoppeinheiten 27 am bewegbaren Umschaltelement 7 dargestellt, welche die Bewegung des Umschaltelements 7 in Bewegungsrichtung 10 dann stoppen, wenn das bewegbare Auslöselement 27 nach der Bewegung sich in der vordefinierten Endposition (siehe Figur 3) befindet.

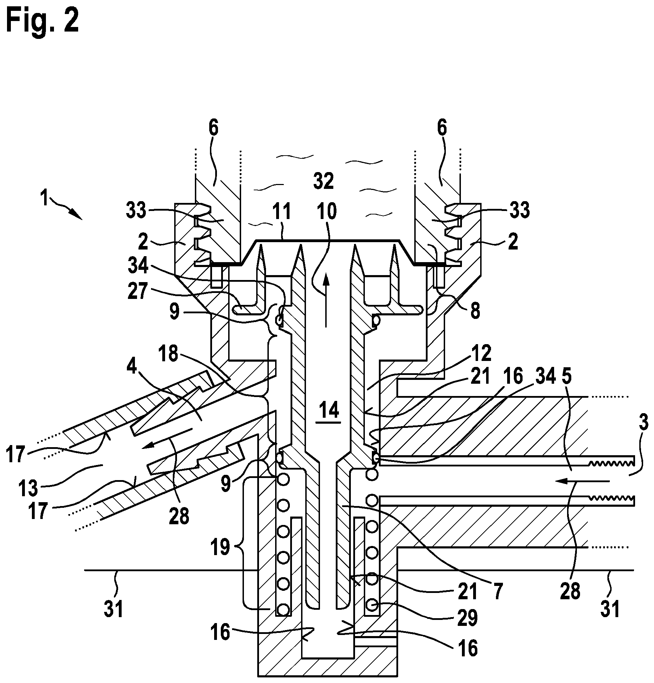

In Figur 2 ist die gleiche Ausführungsform einer erfindungsgemäßen Vorrichtung 1 in einem erfindungsgemäßen System 38 wie aus Figur 1 zu sehen. Jedoch wurde bei der in Figur 2 dargestellten Ausführungsform bereits der Sicherungspin gelöst, wodurch die erfindungsmäßen Vorrichtung 1 wie in Figur 2 dargestellt sich bereits im Aktivierungsmodus befindet. Bei der in Figur 2 dargestellten Ausführungsform wurde das bewegbare Umschaltelement 7 bereits ausreichend in Bewegungsrichtung 10 bewegt, da der Druckluftstrom vom Gasanschluss 3 kommend nicht mehr in den Umgehungsabschnitt 18 sondern in den Aktivierungsabschnitt 19 geleitet wird und somit aufgrund des unteren Luftstrombrechungselemente 9 das bewegbare Umschaltelement 7 nun ausschließlich mittels des vom Gasanschluss 3 kommenden Druckluftstromes in Bewegungsrichtung 10 des Dichtmittelanschlusses 2 beschleunigt wird. Nach dem Durchtrennen des Siegels 11 werden die Stoppeinheiten 27 die Bewegung des bewegbaren Umschaltelements 7 in die Bewegungsrichtung 10 stoppen, woraufhin der Aktivierungsmodus eine erfindungsgemäße Vorrichtung 1 endet und die erfindungsmäßen Vorrichtung 1 in den Dichtmittelmodus übergeht (siehe Figur 3), indem das Dichtmittel 32 zusammen mit Druckluft aus dem Dichtmittelbehälter 6 in Strömungsrichtung 28 des reifenseitigen Endes 13 des Dichtmitteltransportkanals 4 geleitet wird.

In Figur 3 ist die gleiche Ausführungsform einer erfindungsgemäßen Vorrichtung 1 in einem erfindungsgemäßen System 38 wie aus Figur 2 und aus Figur 1 zu sehen. Jedoch wurde bei der in Figur 3 dargestellten Ausführungsform bereits das Siegel 26 zerstört und die Bewegung des bewegbaren Umschaltelements 7 in die Bewegungsrichtung 10 mittels der Stoppeinheiten 27 gestoppt, wodurch die erfindungsmäßen Vorrichtung 1 wie in Figur 3 dargestellt sich bereits im Dichtmittelmodus befindet. Im Dichtmittelmodus wird Druckluft vom Gasanschluss 3 in Strömungsrichtung 28 um den Abschnitt 20 des bewegbaren Umschaltelements 7 in den Innenkanal 14 und anschließend in den Dichtmittelbehälter 6 geleitet. Dort angekommen vermischt sich die Druckluft mit Dichtmittel 32. Die Mischung aus Druckluft und Dichtmittel 32 wird dann in Strömungsrichtung 28 durch den Durchtrennungsabschnitt 8 des Umschaltelements 7 in den Dichtmitteltransportkanal 4 gedrückt und kann in Strömungsrichtung 28 von dort aus in den in Figur 3 nicht dargestellten Reifen mit der Panne geleitet werden. In Figur 3 ist zudem ersichtlich, dass der untere O-Ringe 34 an dem unteren Luftstrombrechungselemente 9 so angebracht ist, dass ein Weiterleiten der Druckluft vom Gasanschluss 3 direkt in den Dichtmitteltransportkanal verhindert wid.

Figur 4 zeigt eine schematische Darstellung eines Querschnitts einer erfindungsgemäßen Vorrichtung 1 mit einem bewegbaren Umschaltelement 7 umfassend einen Durchtrennungsabschnitt 8 zum Durchtrennen eines am Verbindungsanschluss 33 eines Dichtmittelbehälters 6 angebrachten Siegels 11, wobei das bewegbare Umschaltelement im Drucklufttransportkanal 5 der erfindungsgemäßen Vorrichtung 1 in einer vordefinierten Ausgangsposition ist. Die in Figur 4 gezeigte Vorrichtung 1 umfasst einen Gasanschluss 3 zur Verbindung mit einer Druckluftquelle, einen Dichtmittelanschluss 2 zur Verbindung mit einem Dichtmittelbehälter 6, zwei Kanäle 5, 4, wobei ein erster Kanal ein Dichtmitteltransportkanal 4 zum Transportieren einer Dichtmitteldispersion vom Dichtmittelanschluss 2 in einen Fahrzeugluftreifen ist und ein zweiter Kanal ein Drucklufttransportkanal 5 zum Transportieren von Druckluft zum Dichtmittelanschluss 2 oder zum Dichtmitteltransportkanal 4 ist, wobei die Vorrichtung 1 ein bewegbares Umschaltelement 7 aufweist, wobei das bewegbare Umschaltelement 7 der mittels eines vom Gasanschluss 3 in Strömungsrichtung 28 strömenden Druckluftstromes bewegt werden kann und einen Durchtrennungsabschnitt 8 zum Durchtrennen eines Siegels 11 aufweist. Das bewegbare Umschaltelement weist dabei die Form eines Hohlzylinders auf und daher auch einen Innenkanal 14, wobei das Umschaltelement 7 entlang der Höhenerstreckung 15 im Zusammenwirken mit der Innenwand 16 des Drucklufttransportkanals 6 mehrere Abschnitte bildet, wobei die mehreren Abschnitte die folgenden Abschnitte umfassen: einen Umgehungsabschnitt 18 zum Leiten von Druckluft vom Drucklufttransportkanal 5 direkt in den Dichtmitteltransportkanal 4 und einen Aktivierungsabschnitt 19, wobei der Aktivierungsabschnitt 19 dazu eingerichtet ist, vom Gasanschluss 3 kommende Druckluft zum Bewegen des Umschaltelements 7 in Richtung des Dichtmittelanschlusses 2 zu verwenden, und einen weiteren Abschnitt 20, wobei der weitere Abschnitt 20 so ausgeformt ist, dass vom Gasanschluss 3 kommende Druckluft durch den Innenkanal 14 des Umschaltelements 7 in Bewegungsrichtung 10 zum Dichtmittelanschlusses 2 oder in einen Dichtmittelbehälter 6 geleitet werden kann. Die verschiedenen Abschnitte 8, 18, 19 werden in der in Figur 4 gezeigten Ausführungsform mittels Luftstrombrechungselementen 9 umfassend O-Ringe 34 voneinander abgegrenzt. In Figur 1 ist gezeigt das das Umschaltelement 7 am verteilerseitigen Ende 12 des Drucklufttransportkanals 5 angeordnet ist. Die in Figur 4 gezeigte Ausführungsform einer erfindungsgemäßen Vorrichtung 1 befindet sich im vorstehend beschriebenen Druckluftmodus, da Druckluft vom Gasanschluss 3 direkt zum reifenseitigen Ende 13 des Dichtmitteltransportkanals 4 geleitet wird. Dies geschieht, indem die Druckluft vom Gasanschluss 3 durch den Zwischenraum zwischen der Innenwand 16 und der Außenwand 21 des Umschaltelements 7 um das Umschaltelement 7 herum geleitet wird und am verteilerseitigen Ende des Dichtmitteltransportkanals 4 in den Dichtmitteltransportkanal 4 in Strömungsrichtung 28 weiter zum reifenseitigen Ende 13 geleitet wird. Wie in Figur 1 gezeigt befindet sich das Dichtmittel 32 während des Druckluftmodus noch hinter dem verschlossenen Siegel 11 in dem mittels des Verbindungsanschluss 33 angeschlossenen Dichtmittelbehälter 6. Aufgrund der Übersichtlichkeit sind in Figur 4 weder die Verbindungsmittel zum Verbinden des reifenseitigen Endes des Dichtmitteltransportkanals mit einem eine Panne aufweisenden Reifen noch die Druckluftquelle, noch ein einteiliges Gehäuse eines erfindungsgemäßen Systems gezeigt.

In Figur 4 ist zu sehen, dass die Luftstrombrechungselemente 9 den Umgehungsabschnitt 18 des Umschaltelements 7 so abdichten, dass die Druckluft vom Gasanschluss 3 direkt in den Dichtmitteltransportkanal 4 geleitet wird. Dabei wird das bewegbare Umschaltelement 7 mittels einer elektronisch manipulierbaren Halteeinheit 35 festgehalten, welche in Figur 4 von einer Steuerung- und Regelungseinheit 36 mittels eines elektronisch auslösbaren Auslöselement 41 so manipuliert werden kann, dass die Halteeinheit 35 das bewegbare Umschaltelement 7 nicht mehr in die vordefinierte Ausgangsposition hält, damit die Feder 29 das bewegbare Umschaltelement 7 in Bewegungsrichtung 10 beschleunigen kann. Steuerung- und Regelungseinheit 36 kann dabei Druckmesssignale von einem Manometer 37 empfangen, welches wie in Figur 4 gezeigt den Druck im Dichtmitteltransportkanal messen kann. Jedoch ist auch denkbar, dass das Manometer 37 den Reifeninnendrucks in einem am reifenseitigen Ende 13 des Dichtmitteltransportkanals 4 angebrachten Reifens mit einer Panne misst. Des Weiteren sind in Figur 1 Stoppeinheiten 27 in der erfindungsgemäßen Vorrichtung 1 dargestellt, welche die Bewegung des Umschaltelements 7 in Bewegungsrichtung 10 dann stoppen, wenn das bewegbare Umschaltelement 7 sich in einer vordefinierten Endposition befindet.

In Figur 5 ist die gleiche Ausführungsform eines bewegbaren Umschaltelements 7 einer erfindungsgemäßen Vorrichtung 1 wie aus Figur 4 zu sehen, jedoch ist das bewegbare Umschaltelement 7 einer erfindungsgemäßen Vorrichtung 1 in Figur 5 aus der Froschperspektive perspektivisch dargestellt. Das Umschaltelement 7 umfasst dabei einen Durchtrennungsabschnitt 8, einen Umgehungsabschnitt 18, einen Aktivierungsabschnitt 19 und einen weiteren Abschnitt 20 sowie einen Innenkanal 14. Wie in Figur 5 gezeigt umfasst der Durchtrennungsabschnitt 8 Spitze und/oder scharfe Kanten zum Durchtrennen eines nicht dargestellten Siegels wie vorstehend beschrieben. Die einzelnen Abschnitte 8, 18, 19, 20 sind mittels von der idealen Form eines Hohlzylinders abweichenden Erhöhungen voneinander getrennt, wobei auf diesen Erhöhungen jeweils ein O-Ring 34 wie in Figur 5 gezeigt aufliegen und diese Erhöhungen so ausgestaltet sind, dass ein aus der Strömungsrichtung 28 kommender und auf die Außenwand 21 treffende Druckluftstromes das bewegbare Umschaltelement 7 in die Bewegungsrichtung 10 beschleunigen würde. Diese Erhöhungen und insbesondere ihre speziell abgerundete Form stellen ebenfalls spezielle Luftstrombrechungselemente 9 im Rahmen der vorliegenden Erfindung dar.

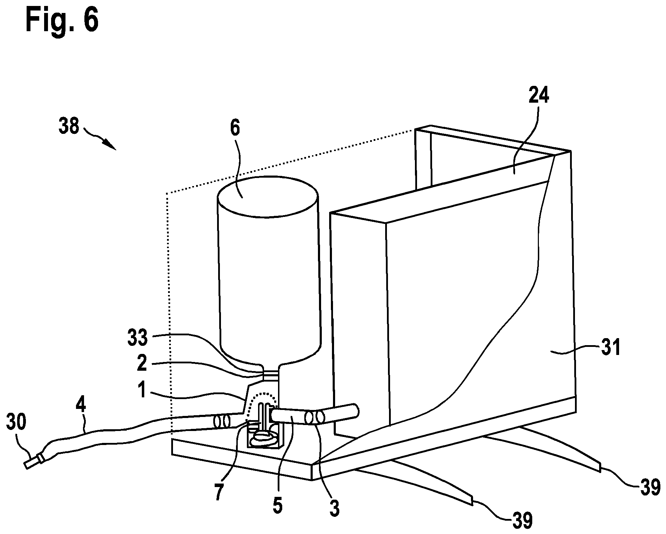

Figur 6 zeigt schematisch eine perspektivische Darstellung ein erfindungsgemäßes System 38 zum Abdichten und Aufpumpen von Fahrzeugluftreifen, wobei ein Teil des einteiligen Gehäuses 31 mittels gepunktete Linien angedeutet durchsichtig dargestellt ist, um die einzelnen Komponenten des Systems 38 besser zu erkennen. Das System 38 umfasst eine Vorrichtung 1, Verbindungsmittel 30 zum Verbinden des reifenseitigen Endes des Dichtmitteltransportkanals mit einem eine Panne aufweisenden Reifen, eine Druckluftquelle 24 und einen Dichtmittelbehälter 6 mit Dichtmittel und die Vorrichtung 1
- mit der Druckluftquelle 24 mittels des Gasanschlusses 3,
- mit dem Verbindungsanschluss 33 des Dichtmittelbehälters 6 mittels des Dichtmittelanschlusses 2 und
- mit den besagten Verbindungsmitteln 30 mittels des Dichtmitteltransportkanals 4 einsatzbereit verbunden ist. Zudem ist auch ein Teil der Vorrichtung 1 mittels gepunkteter Linien in Figur 6 angedeutet durchsichtig dargestellt, so dass das bewegbare Umschaltelement 7 innerhalb der Vorrichtung 1 erkannt werden kann. Das System 38 ermöglicht das Aufpumpen von Fahrzeugluftreifen in dem von dem Kompressor 24 Druckluft in den Drucklufttransportkanal 5 und anschließend über den Dichtmitteltransportkanal 4 und über die Verbindungsmittel 30 in einen Fahrzeugluftreifen geleitet werden können. Zudem kann das Umschaltelement 7 je nach Ausführungen wie vorstehend beschrieben ein Siegel am Dichtmittelbehälter 6 zerstören und somit den Dichtmittelmodus auslösen, indem die Druckluft nicht direkt in den Dichtmitteltransportkanal 4, sondern zuvor in den Dichtmittelbehälter geleitet wird. Anschließend kann im Dichtmittelmodus die Mischung aus Dichtmittel und Druckluft, wobei die Mischung häufig in Form einer Dispersion mit der Druckluft als kontinuierliche Phase vorliegt, über den Dichtmitteltransportkanal 4 und den Verbindungsmitteln 30 in einen Fahrzeugluftreifen gedrückt werden kann. Im Fahrzeugreifen angekommen kann die Mischung oder Dispersion aus Dichtmittel und Druckluft dann die Undichtigkeit im Fahrzeugluftreifen abdichten. Das in Figur 6 gezeigt erfindungsgemäße System 38 wurde mittels der montierbaren Standfüße 39 in eine aufrechte Position gebracht, sodass der innerhalb des einteiligen Gehäuses 31 liegende Dichtmittelbehälter 6 kopfüber in dem erfindungsgemäßen System 38 positioniert ist. Die montierbaren Standfüße 39 sind ein Beispiel von Aufrichtmitteln 39 wie sie verwendet werden können, um das erfindungsgemäße System 38 in eine gewünschte Position zu bringen. Die montierbaren Standfüße 39 sind bevorzugt nicht von vornherein einem erfindungsgemäßen System 38 angebracht, damit das erfindungsgemäße System 38 möglichst kompakt in einem Fahrzeug untergebracht werden kann. Dies ist mit dem in Figur 6 dargestellten erfindungsgemäßen System 38 besonders gut möglich, da es eine besonders kompakte Bauweise eines Reifenreparaturkit zeigt.

Die Figuren sind 7 und 8 zeigen eine weitere Ausführungsform eines erfindungsgemäßen Systems 38 in einem einzigen Gehäuse 31 aus einer Seitenansicht, wobei der Dichtmittelbehälter 6 zu sehen ist und der Dichtmittelbehälter 6 teilweise das restliche Gehäuse 31 aus der Seitenansicht wie in Figur 7 dargestellt verdeckt.

Die erfindungsmäßen Vorrichtung 1 wie in Figur 7 gezeigt ist dabei über den Dichtmittelanschluss 33 mit dem Dichtmittelbehälter 6 und über den in Figur 7 nicht gezeigten Gasanschluss mit dem in Figur 7 nicht gezeigten Kompressor verbunden. Das in Figur 7 gezeigte erfindungsgemäße System 38 liegt flach auf einem Unterboden auf wobei es in dieser Position sich im Druckluftmodus befindet und Druckluft direkt vom Drucklufttransportkanal in den Dichtmitteltransportkanal weiter zu einem Fahrzeugluftreifen transportieren kann.

Wie in Figur 8 gezeigt kann der Dichtmittelbehälter 6 zusammen mit dem Dichtmittelanschluss 2 der erfindungsgemäßen Vorrichtung 1 in Drehbewegungsrichtung 40 gedreht werden, wodurch der Dichtmittelbehälter 6 kopfüber zum Stehen kommt, das heißt der Verbindungsanschluss 33 befindet sich unterhalb des restlichen Dichtmittelbehälter 6. Bei oder nach dieser Drehbewegung wird mittels der vorstehend beschriebenen Mechanismen der Dichtmittelmodus in der erfindungsgemäßen Vorrichtung 1 ausgelöst. Bei der in Figur 8 gezeigten Drehbewegung kann beispielsweise die vorstehend beschriebene Halteeinheit auf unterschiedliche Weisen gelöst werden.

### Bezugszeichenliste:

- 1: Aufnahmeeinheit; Verteilervorrichtung; erfindungsgemäße Vorrichtung zum Transportieren von Druckluft und/oder Dichtmittel in einen Fahrzeugluftreifen
- 2: Dichtmittelanschluss zur Verbindung mit mindestens einem Dichtmittelbehälter
- 3: Gasanschluss zur Verbindung mit mindestens einer Druckluftquelle
- 4: Dichtmitteltransportkanal zur Verbindung mit mindestens einer Druckluftquelle
- 5: Drucklufttransportkanal zur Verbindung mit mindestens einem Dichtmittelbehälter
- 6: Dichtmittelbehälter
- 7: bewegbares Umschaltelement, welches mittels eines vom Gasanschluss kommenden Druckluftstromes bewegt werden kann
- 8: ein zum Durchtrennen eines Siegels geeigneter Durchtrennungsabschnitt des bewegbaren Umschaltelements
- 9: Luftstrombrechungselemente
- 10: Bewegungsrichtung des Umschaltelements
- 11: Siegel zum Durchtrennen mittels des Durchtrennungsabschnitt des bewegbaren Umschaltelements
- 12: verteilerseitiges Ende des Drucklufttransportkanals
- 13: reifenseitiges Ende des Dichtmitteltransportkanals
- 14: Innenkanal des bewegbaren Umschaltelements
- 15: Höhenerstreckung des bewegbaren Umschaltelements
- 16: Innenwand des Drucklufttransportkanals
- 17: Innenwand des Dichtmitteltransportkanals
- 18: der erste Abschnitt des bewegbaren Umschaltelements; Umgehungsabschnitt zum Leiten von Druckluft vom Drucklufttransportkanal direkt in den Dichtmitteltransportkanal
- 19: zweiter Abschnitt des bewegbaren Umschaltelements; Aktivierungsabschnitt eingerichtet, um vom Gasanschluss kommende Druckluft zum Bewegen des Umschaltelements in Richtung des Dichtmittelanschlusses zu verwenden
- 20: dritter Abschnitt des bewegbaren Umschaltelements eingerichtet, um vom Gasanschluss kommende Druckluft durch den Innenkanal des Umschaltelements in Form eines Hohlzylinders zu leiten
- 21: Außenwand des bewegbaren Umschaltelements
- 22: Stift des Sicherungspins; manuell manipulierbare Halteeinheit zum Halten des bewegbaren Umschaltelements
- 23: Öse des Sicherungspins; Auslöselement zum manuellen Lösen des Haltens der Halteeinheit zum Bewirken einer Bewegung des bewegbaren Umschaltelements aus der Ausgangsposition hin zum Dichtmittelanschluss
- 24: Druckluftquelle; Kompressor
- 25: Verbindungsanschluss des Dichtmittelbehälters
- 26: zerstörter Siegel des Dichtmittelbehälters
- 27: Stoppeinheit zum Stoppen der Bewegung des Umschaltelements
- 28: Strömungsrichtung der Druckluft und/oder des Dichtmittels
- 29: Feder; Federelement zum Beschleunigen des bewegbaren Umschaltelements in Richtung des Dichtmittelanschlusses
- 30: Verbindungsmittel zum Verbinden des reifenseitigen Endes des Dichtmitteltransportkanals mit einem eine Panne aufweisenden Reifen
- 31: einteiliges Gehäuse für die erfindungsgemäße Vorrichtung, die Druckluftquelle und der Dichtmittelbehälter
- 32: Dichtmittel
- 33: für einen Anschluss mit einem Dichtmittelanschluss der Vorrichtung vorgesehenen Verbindungsanschluss am Dichtmittelbehälter
- 34: O-Ring
- 35: elektronisch manipulierbare Halteeinheit zum Halten des bewegbaren Umschaltelements
- 36: Steuerungs- und Regelungseinheit zur elektronischen Manipulation der Halteeinheit des bewegbaren Umschaltelements
- 37: Druckmesseinheit zum Messen des Luftdrucks in einem Reifen oder im Dichtmitteltransportkanal; Manometer
- 38: Tragbares/transportables System zum Abdichten und Aufpumpen von Fahrzeugluftreifen; Pannenhilfesystem; Reifenreparaturset
- 39: Montierbarer Standfuß; Aufrichtmittel zum Aufstellen des tragbaren/transportablen Systems, sodass der Dichtmittelbehälter im Gehäuse kopfüber im System angeordnet ist
- 40: Drehbewegung zum Drehen des Dichtmittelbehälter am Dichtmittelanschlusses
- 41: elektronisch auslösbares Auslöselement zum Lösen des Haltens der Halteeinheit 35

## Patentansprüche

1. Vorrichtung (1) zum Transportieren von Druckluft und/oder Dichtmittel in einen Fahrzeugluftreifen, umfassend:
- mindestens einen Gasanschluss (3) zur Verbindung mit mindestens einer Druckluftquelle,
- mindestens einen Dichtmittelanschluss (2) zur Verbindung mit mindestens einem Dichtmittelbehälter,
- mindestens zwei Kanäle, wobei ein erster Kanal ein Dichtmitteltransportkanal zum Transportieren einer Dichtmitteldispersion vom Dichtmittelanschluss in einen Fahrzeugluftreifen ist und ein zweiter Kanal ein Drucklufttransportkanal zum Transportieren von Druckluft zum Dichtmittelanschluss oder zum Dichtmitteltransportkanal ist,
wobei die Vorrichtung (1) ein bewegbares Umschaltelement (7) aufweist, wobei das bewegbare Umschaltelement (7) der mittels eines vom Gasanschluss (3) kommenden Druckluftstromes bewegt werden kann und einen Durchtrennungsabschnitt (8) zum Durchtrennen eines Siegels (11) aufweist,
**dadurch gekennzeichnet, dass**
das bewegbare Umschaltelement (7) zumindest im Wesentlichen in Form eines Hohlzylinders ausgebildet ist und einen Innenkanal aufweist, wobei das Umschaltelement (7) entlang der Höhenerstreckung des Hohlzylinders im Zusammenwirken mit der Innenwand des Drucklufttransportkanals mehrere Abschnitte bildet, wobei die mehreren Abschnitte zumindest den folgenden Abschnitt umfassen:
- einen Aktivierungsabschnitt (19), wobei der Aktivierungsabschnitt (19) dazu eingerichtet ist, vom Gasanschluss kommende Druckluft zum Bewegen des Umschaltelements (7) in Richtung des Dichtmittelanschlusses zu verwenden, **dadurch gekennzeichnet, dass** die mehreren Abschnitte außerdem zumindest den folgenden Abschnitt umfassen:
- einen Umgehungsabschnitt (18) zum Leiten von Druckluft vom Drucklufttransportkanal direkt in den Dichtmitteltransportkanal.

2. Vorrichtung (1) nach Anspruch 1, wobei das bewegbare Umschaltelement (7) im Drucklufttransportkanal (5) angeordnet ist und/oder ein, zwei, drei vier, fünf oder mehr als fünf Luftstrombrechungselemente (9) aufweist, wobei das eine oder die Luftstrombrechungselemente (9) geeignet sind, zumindest teilweise die im Wesentlichen zur Bewegungsrichtung des Umschaltelements (7) parallel verlaufenden Strömungsrichtung von Druckluft im Drucklufttransportkanal (5) abzulenken oder so abzulenken, dass im Drucklufttransportkanal (5) das bewegbare Umschaltelement (7) mittels aus einer Druckluftquelle (24) kommenden Druckluft in Richtung des Dichtmittelanschluss (2) zu bewegen.

3. Vorrichtung (1) nach einem der vorangehenden Ansprüche, wobei das Umschaltelement (7) entlang der Höhenerstreckung des Hohlzylinders im Zusammenwirken mit der Innenwand des Drucklufttransportkanals (5) mindestens einen weiteren Abschnitt bildet, wobei der eine weitere Abschnitt so ausgeformt ist, dass vom Gasanschluss kommende Druckluft durch den Innenkanal des Umschaltelements (7) in Form eines Hohlzylinders und anschließend in Richtung des Dichtmittelanschlusses (2) oder in einen Dichtmittelbehälter (6) geleitet wird.

4. Vorrichtung (1) einem der vorangehenden Ansprüche, wobei
- der Durchtrennungsabschnitt des Umschaltelements (7) so am Umschaltelement (7) angeordnet ist und dazu vorgesehen ist, aufgrund einer Bewegung des bewegbaren Umschaltelements (7) in Richtung des Dichtmittelanschlusses (2) ein Siegel (11) am Dichtmittelanschluss oder ein Siegel (11) an einem am Dichtmittelanschluss (2) befestigten Dichtmittelbehälter (6) zu durchtrennen,
und/oder
- der Dichtmittelanschluss (2) mit einem Siegel (11) versiegelt ist, wobei das Siegel (11) des Dichtmittelanschlusses (2) dazu ausgelegt ist, bei einer mittels aus einer Druckluftquelle (24) kommenden Druckluft ausgelösten Bewegung des bewegbaren Umschaltelements (7) in Richtung des Dichtmittelanschlusses (2) durchtrennt zu werden.

5. Vorrichtung (1) nach einem der vorangehenden Ansprüche, wobei die Vorrichtung (1) eine elektronisch oder manuell manipulierbare Halteeinheit zum Halten des bewegbaren Umschaltelements (7) aufweist, wobei bevorzugt die Halteeinheit so eingerichtet ist, dass sie so manipuliert werden kann, dass das bewegbare Umschaltelement (7) von der Halteeinheit gelöst werden kann und nach dem Lösen eine mittels Druckluft aus einer Druckluftquelle (24) bewirkte Bewegung des bewegbaren Umschaltelements (7) ausgelöst werden kann, wobei die bewirkte Bewegung besonders bevorzugt geeignet ist, ein Siegel (11) am Anschluss eines am Dichtmittelanschluss (2) befestigten Dichtmittelbehälters (6) oder ein Siegel (11) an dem Dichtmittelanschluss (2) mittels dem Durchtrennungsabschnitt (8) zum Durchtrennen eines Siegels (11) zu durchtrennen.

6. Vorrichtung (1) nach einem der vorangehenden Ansprüche, wobei die Vorrichtung (1) eine elektronisch oder manuell manipulierbare Halteeinheit zum Halten des bewegbaren Umschaltelements (7) in einer vordefinierten Ausgangsposition aufweist und die Halteeinheit bevorzugt so ausgestaltet ist, dass die Halteeinheit das bewegbare Umschaltelement (7) während Umströmens des Umschaltelements (7) mit Druckluft aus einer Druckluftquelle (24) in der vordefinierten Ausgangsposition halten kann, wobei besonders bevorzugt die vordefinierte Ausgangsposition des bewegbaren Umschaltelements (7) innerhalb des Drucklufttransportkanals (5) und/oder am verteilerseitigen Ende des Drucklufttransportkanals (5) ist.

7. Vorrichtung (1) nach einem der vorangehenden Ansprüche, wobei die Vorrichtung (1) ein Auslöselement (23) zum manuellen Lösen des Haltens der Halteeinheit zum Bewirken einer Bewegung des bewegbaren Umschaltelements aus der Ausgangsposition hin zum Dichtmittelanschluss (2) aufweist, wobei das Auslöselement (23), die Halteeinheit und das bewegbare Umschaltelement (7) bevorzugt so eingerichtet sind, dass nach dem Lösen des Auslöselements (23) eine mittels Druckluft aus einer Druckluftquelle (24) bewirkte Bewegung des bewegbaren Umschaltelements (7) ausgelöst werden kann und die bewirkte Bewegung geeignet ist, ein Siegel (11) am Anschluss eines Dichtmittelbehälters (6) oder ein Siegel (11) an dem Dichtmittelanschluss (2) zu durchtrennen.

8. Vorrichtung (1) nach einem der vorangehenden Ansprüche, wobei die Vorrichtung (1) eine Stoppeinheit zum Stoppen der Bewegung des Umschaltelements (7) aufweist, wobei die Stoppeinheit bevorzugt so in der Vorrichtung (1) angebracht ist, dass das Umschaltelement (7) erst nach dem Durchtrennen mindestens eines Siegels (11) und nach dem Leiten von Druckluft durch den Innenkanal des Umschaltelements (7) zum Dichtmittelanschluss (2) gestoppt wird.

9. Vorrichtung (1) nach einem der vorangehenden Ansprüche, wobei der Drucklufttransportkanal (5) zylinderförmig ausgebildet ist und einen Innendurchmesser und einen Außendurchmesser aufweist und/oder wobei die Vorrichtung ein Federelement zum Beschleunigen des bewegbaren Umschaltelements (7) in Richtung des Dichtmittelanschlusses (2) aufweist, wobei das Federelement so ausgebildet ist, dass nach dem Lösen des Auslöselements (23) oder nach einer geeigneten Manipulation des Umschaltelements (7) das Federelement eine Beschleunigung des bewegbaren Umschaltelements (7) in Richtung Dichtmittelanschluss (2) bewirkt.

10. Tragbares/transportables System (38) zum Abdichten und Aufpumpen von Fahrzeugluftreifen, umfassend
- mindestens eine Vorrichtung (1) nach einem der vorangehenden Ansprüche,
- Verbindungsmittel zum Verbinden des reifenseitigen Endes des Dichtmitteltransportkanals (4) mit einem eine Panne aufweisenden Reifen,
- mindestens eine Druckluftquelle (24), wobei die Druckluftquelle (24) bevorzugt ein Kompressor ist und bevorzugt
- mindestens einen Hubkolbenverdichter mit einem Zylinder und mit einem Hubkolben sowie
- mindestens einen Motor zum Bewegen des Hubkolbens in dem Zylinder des Hubkolbenverdichters
aufweist,
und optional
- mindestens einen Dichtmittelbehälter (6) mit Dichtmittel (32),

11. Tragbares/transportables System (38) nach Anspruch 10, wobei ein für einen Anschluss mit einem Dichtmittelanschluss (2) der Vorrichtung (1) vorgesehenen Verbindungsanschluss am Dichtmittelbehälter (6) mit einem Siegel (11) versiegelt ist und/oder die Vorrichtung (1) mit der Druckluftquelle (24) über den Gasanschluss, mit dem Verbindungsanschluss des Dichtmittelbehälters (6) über den Dichtmittelanschluss (2) und mit den besagten Verbindungsmitteln einsatzbereit verbunden ist.

12. Tragbares/transportables System (38) nach Anspruch 10 oder Anspruch 11, wobei die Vorrichtung (1), die Druckluftquelle (24) und optional der Dichtmittelbehälter (6) in einem einzigen Gehäuse angeordnet sind, wobei das Gehäuse bevorzugt so ausgebildet ist, dass es im Betrieb so aufgestellt werden kann, dass der Dichtmittelbehälter (6) im Gehäuse kopfüber im System (38) angeordnet ist.

13. Verfahren zum Abdichten von Fahrzeugluftreifen, umfassend die folgenden Schritte:
A) Bereitstellen eines Systems (38) nach einem der Ansprüche 10 bis 12 mit einem Dichtmittelbehälter (6) mit Dichtmittel (32) und eines Fahrzeugluftreifens mit einer Panne,
B) Verbinden des Dichtmitteltransportkanals (4) des Systems (38) mit dem Fahrzeugluftreifen mit der Panne mittels der Verbindungsmittel des Systems (38),
C) Bewegen des bewegbaren Umschaltelements (7) in Richtung des Dichtmittelanschluss (2) mittels Druckluft aus der Druckluftquelle (24), wobei die Bewegung bevorzugt mittels Lösens des Haltens der Halteeinheit ausgelöst wird,
D) Verwendung eines Systems (38) nach einem der Ansprüche 10 bis 12 zum Pumpen von aus der Druckluftquelle (24) kommenden Druckluft in eine Vorrichtung (1) nach einem der Ansprüche 1 bis 9,
E) Durchtrennen eines Siegels (11) am Dichtmittelanschluss (2) und/oder am Dichtmittelbehälter (6), sodass Dichtmittel (32) aus dem Dichtmittelbehälter (6) in den Dichtmitteltransportkanal (4) gelangen kann,
F) Zuführen von Dichtmittel (32) aus dem Dichtmittelbehälter (6) in den Fahrzeugluftreifen mittels der Druckluft aus der Druckluftquelle (24), sodass die Panne am Fahrzeugluftreifen mittels des in den Fahrzeugluftreifen beförderten Dichtmittels (32) zumindest teilweise abgedichtet wird.

14. Verwendung eines Systems (38) nach einem der Ansprüche 10 bis 12
- zum Aufpumpen von Fahrzeugluftreifen
und/oder
- zum Abdichten von Fahrzeugluftreifen.

15. Verwendung
- eines Auslöselement (23) zur Verwendung in einer Vorrichtung (1) wie in einem der Ansprüche 1 bis 9 definiert zum Auslösen einer Bewegung eines bewegbaren Umschaltelements (7) mittels aus einer Druckluftquelle (24) kommenden Druckluft, wobei der Durchtrennungsabschnitt (8) des bewegbaren Umschaltelements (7) bevorzugt ein Siegel (11) an dem Dichtmittelanschluss (2) und/oder ein Siegel (11) an einem Dichtmittelbehälter (6) durchtrennt.

## Claims

1. Device (1) for transporting compressed air and/or sealant into a pneumatic vehicle tyre, comprising:
- at least one gas connection (3) for connecting to at least one compressed-air source,
- at least one sealant connection (2) for connecting to at least one sealant container,
- at least two channels, wherein a first channel is a sealant transport channel for transporting a sealant dispersion from the sealant connection into a pneumatic vehicle tyre and a second channel is a compressed-air transport channel for transporting compressed air to the sealant connection or to the sealant transport channel,
wherein the device (1) has a movable switchover element (7), wherein the movable switchover element (7) can be moved by means of a compressed-air flow coming from the gas connection (3) and has a severing portion (8) for severing a seal (11), **characterized in that**
the movable switchover element (7) is at least substantially in the form of a hollow cylinder and has an internal channel, wherein the switchover element (7) forms, along the vertical extent of the hollow cylinder, in cooperation with the inner wall of the compressed-air transport channel, a plurality of portions, wherein the plurality of portions comprise at least the following portion:
- an activation portion (19), wherein the activation portion (19) is designed to use compressed air coming from the gas connection to move the switchover element (7) in the direction of the sealant connection, **characterized in that** the plurality of portions moreover comprise at least the following portion:
- a bypass portion (18) for conducting compressed air from the compressed-air transport channel directly into the sealant transport channel.

2. Device according to Claim 1, wherein the movable switchover element (7) is arranged in the compressed-air transport channel (5) and/or has one, two, three, four, five or more than five air-flow baffle elements (9), wherein the one or more air-flow baffle elements (9) are suitable for at least partially deflecting the flow direction, extending substantially parallel to the direction of movement of the switchover element (7), of compressed air in the compressed-air transport channel (5) or to deflect it such that, in the compressed-air transport channel (5), the movable switchover element (7) is moved by means of compressed air coming from a compressed-air source (24) in the direction of the sealant connection (2).

3. Device (1) according to either of the preceding claims, wherein the switchover element (7) forms, along the vertical extent of the hollow cylinder, in cooperation with the inner wall of the compressed-air transport channel (5), at least one further portion, wherein the one further portion is formed such that compressed air coming from the gas connection is conducted through the internal channel of the switchover element (7) in the form of a hollow cylinder and subsequently in the direction of the sealant connection (2) or into a sealant container (6).

4. Device (1) according to one of the preceding claims, wherein
- the severing portion of the switchover element (7) is arranged on the switchover element (7) and intended, on account of a movement of the movable switchover element (7) in the direction of the sealant connection (2), to sever a seal (11) on the sealant connection or a seal (11) on a sealant container (6) fastened to the sealant connection (2),
and/or
- the sealant connection (2) is sealed with a seal (11), wherein the seal (11) of the sealant connection (2) is designed to be severed in the event of a movement of the movable switchover element (7), actuated by means of compressed air coming from a compressed-air source (24), in the direction of the sealant connection (2).

5. Device (1) according to one of the preceding claims, wherein the device (1) has an electronically or manually manipulable holding unit for holding the movable switchover element (7), wherein preferably the holding unit is designed such that it can be manipulated such that the movable switchover element (7) can be released from the holding unit and after it has been released, a movement of the movable switchover element (7), brought about by means of compressed air from a compressed-air source (24), can be actuated, wherein the movement brought about is particularly preferably suitable for severing a seal (11) on the connection of a sealant container (6) fastened to the sealant connection (2) or a seal (11) on the sealant connection (2) by means of the severing portion (8) for severing a seal (11).

6. Device (1) according to one of the preceding claims, wherein the device (1) has an electronically or manually manipulable holding unit for holding the movable switchover element (7) in a predefined starting position and the holding unit is preferably configured such that the holding unit can hold the movable switchover element (7) in the predefined starting position while the switchover element (7) is flowed around by compressed air from a compressed-air source (24), wherein particularly preferably the predefined starting position of the movable switchover element (7) is within the compressed-air transport channel (5) and/or at the distributor-side end of the compressed-air transport channel (5).

7. Device (1) according to one of the preceding claims, wherein the device (1) has an actuating element (23) for manually releasing the hold of the holding unit in order to bring about a movement of the movable switchover element from the starting position to the sealant connection (2), wherein the actuating element (23), the holding unit and the movable switchover element (7) are preferably designed such that, after the releasing of the actuating element (23), a movement of the movable switchover element (7), brought about by means of compressed air from a compressed-air source (24), can be actuated and the movement brought about is suitable for severing a seal (11) on the connection of a sealant container (6) or a seal (11) on the sealant connection (2).

8. Device (1) according to one of the preceding claims, wherein the device (1) has a stopping unit for stopping the movement of the switchover element (7), wherein the stopping unit is preferably fitted in the device (1) such that the switchover element (7) is only stopped after at least one seal (11) has been severed and after compressed air has been conducted through the internal channel of the switchover element (7) to the sealant connection (2).

9. Device (1) according to one of the preceding claims, wherein the compressed-air transport channel (5) is cylindrical and has an inside diameter and an outside diameter, and/or wherein the device has a spring element for accelerating the movable switchover element (7) in the direction of the sealant connection (2), wherein the spring element is configured such that, after the releasing of the actuating element (23) or after a suitable manipulation of the switchover element (7), the spring element brings about an acceleration of the movable switchover element (7) in the direction of the sealant connection (2).

10. Portable/transportable system (38) for sealing and inflating pneumatic vehicle tyres, comprising
- at least one device (1) according to one of the preceding claims,
- connecting means for connecting the tyre-side end of the sealant transport channel (4) to a tyre with a puncture,
- at least one compressed-air source (24), wherein the compressed-air source (24) is preferably a compressor and preferably has
- at least one reciprocating-piston compressor having a cylinder and having a reciprocating piston, and
- at least one motor for moving the reciprocating piston in the cylinder of the reciprocating-piston compressor,
and optionally
- at least one sealant container (6) with sealant (32).

11. Portable/transportable system (38) according to Claim 10, wherein a connection, provided for connecting to a sealant connection (2) of the device (1), on the sealant container (6) is sealed with a seal (11)and/or the device (1) is connected to the compressed-air source (24) via the gas connection, to the connection of the sealant container (6) via the sealant connection (2) and to said connecting means so as to be ready for use.

12. Portable/transportable system (38) according to Claim 10 or Claim 11, wherein the device (1), the compressed-air source (24) and optionally the sealant container (6) are arranged in a single housing, wherein the housing is preferably configured such that, in operation, it can be set up such that the sealant container (6) in the housing is arranged upside down in the system (38).

13. Method for sealing pneumatic vehicle tyres, comprising the following steps:
A) providing a system (38) according to one of Claims 10 to 12 having a sealant container (6) with sealant (32) and a pneumatic vehicle tyre with a puncture,
B) connecting the sealant transport channel (4) of the system (38) to the pneumatic vehicle tyre with the puncture by means of the connecting means of the system (38),
C) moving the movable switchover element (7) in the direction of the sealant connection (2) by means of compressed air from the compressed-air source (24), wherein the movement is actuated preferably by releasing the hold of the holding unit,
D) using a system (38) according to one of Claims 10 to 12 to pump compressed air coming from the compressed-air source (24) into a device (1) according to one of Claims 1 to 9,
E) severing a seal (11) on the sealant connection (2) and/or on the sealant container (6) such that sealant (32) can pass out of the sealant container (6) into the sealant transport channel (4),
F) feeding sealant (32) from the sealant container (6) into the pneumatic vehicle tyre by means of the compressed air from the compressed-air source (24), such that the puncture in the pneumatic vehicle tyre is at least partially sealed by means of the sealant (32) delivered into the pneumatic vehicle tyre,

14. Use of a system (38) according to one of Claims 10 to 12
- for inflating pneumatic vehicle tyres
and/or
- for sealing pneumatic vehicle tyres.

15. Use
- of an actuating element (23) for use in a device (1) as defined in one of Claims 1 to 9 for actuating a movement of a movable switchover element (7) by means of compressed air coming from a compressed-air source (24), wherein the severing portion (8) of the movable switchover element (7) preferably severs a seal (11) on the sealant connection (2) and/or a seal (11) on a sealant container (6).

## Revendications

1. Dispositif (1) pour transporter de l'air comprimé et/ou un agent d'étanchéité dans un pneu de véhicule, comprenant :
- au moins un raccord de gaz (3) pour la connexion à au moins une source d'air comprimé,
- au moins un raccord d'agent d'étanchéité (2) pour la connexion à au moins un réservoir d'agent d'étanchéité,
- au moins deux canaux, un premier canal étant un canal de transport d'agent d'étanchéité pour transporter une dispersion d'agent d'étanchéité du raccord d'agent d'étanchéité dans un pneu de véhicule et un deuxième canal étant un canal de transport d'air comprimé pour transporter de l'air comprimé vers le raccord d'agent d'étanchéité ou le canal de transport d'agent d'étanchéité,
le dispositif (1) présentant un élément de commutation mobile (7), l'élément de commutation mobile (7) pouvant être déplacé au moyen d'un courant d'air comprimé provenant du raccord de gaz (3) et présentant une section de sectionnement (8) pour sectionner un sceau (11),
**caractérisé en ce que**
l'élément de commutation mobile (7) est réalisé au moins essentiellement sous la forme d'un cylindre creux et présente un canal intérieur, l'élément de commutation (7) formant plusieurs sections le long de l'extension en hauteur du cylindre creux en coopération avec la paroi intérieure du canal de transport d'air comprimé, les plusieurs sections comprenant au moins la section suivante :
- une section d'activation (19), la section d'activation (19) étant adaptée pour utiliser de l'air comprimé provenant du raccord de gaz pour déplacer l'élément de commutation (7) en direction du raccord d'agent d'étanchéité, **caractérisé en ce que** les plusieurs sections comprennent en outre au moins la section suivante :
- une section de contournement (18) pour conduire l'air comprimé du canal de transport d'air comprimé directement dans le canal de transport d'agent d'étanchéité.

2. Dispositif (1) selon la revendication 1, dans lequel l'élément de commutation mobile (7) est agencé dans le canal de transport d'air comprimé (5) et/ou présente un, deux, trois, quatre, cinq ou plus de cinq éléments de réfraction du courant d'air (9), l'un ou les éléments de réfraction du courant d'air (9) étant appropriés pour dévier au moins partiellement la direction d'écoulement de l'air comprimé dans le canal de transport d'air comprimé (5), qui est essentiellement parallèle à la direction de déplacement de l'élément de commutation (7), ou de la dévier de telle sorte que, dans le canal de transport d'air comprimé (5), l'élément de commutation mobile (7) soit déplacé en direction du raccord d'agent d'étanchéité (2) au moyen d'air comprimé provenant d'une source d'air comprimé (24).

3. Dispositif (1) selon l'une quelconque des revendications précédentes, dans lequel l'élément de commutation (7) forme au moins une autre section le long de l'extension en hauteur du cylindre creux en coopération avec la paroi intérieure du canal de transport d'air comprimé (5), l'une autre section étant configurée de telle sorte que l'air comprimé provenant du raccord de gaz est conduit à travers le canal intérieur de l'élément de commutation (7) sous la forme d'un cylindre creux et ensuite en direction du raccord d'agent d'étanchéité (2) ou dans un réservoir d'agent d'étanchéité (6).

4. Dispositif (1) selon l'une quelconque des revendications précédentes, dans lequel
- la section de sectionnement de l'élément de commutation (7) est agencée sur l'élément de commutation (7) et est prévue pour sectionner un sceau (11) sur le raccord d'agent d'étanchéité ou un sceau (11) sur un réservoir d'agent d'étanchéité (6) fixé au raccord d'agent d'étanchéité (2) en raison d'un déplacement de l'élément de commutation mobile (7) en direction du raccord d'agent d'étanchéité (2),
et/ou
- le raccord d'agent d'étanchéité (2) est scellé avec un sceau (11), le sceau (11) du raccord d'agent d'étanchéité (2) étant conçu pour être sectionné lors d'un déplacement de l'élément de commutation mobile (7) en direction du raccord d'agent d'étanchéité (2), déclenché au moyen d'air comprimé provenant d'une source d'air comprimé (24).

5. Dispositif (1) selon l'une quelconque des revendications précédentes, dans lequel le dispositif (1) présente une unité de retenue manipulable électroniquement ou manuellement pour retenir l'élément de commutation mobile (7), de préférence l'unité de retenue étant adaptée pour pouvoir être manipulée de telle sorte que l'élément de commutation mobile (7) peut être libéré de l'unité de retenue et, après la libération, un déplacement de l'élément de commutation mobile (7) provoqué au moyen d'air comprimé provenant d'une source d'air comprimé (24) peut être déclenché, le déplacement provoqué étant de manière particulièrement préférée approprié pour sectionner un sceau (11) sur le raccord d'un réservoir d'agent d'étanchéité (6) fixé au raccord d'agent d'étanchéité (2) ou un sceau (11) sur le raccord d'agent d'étanchéité (2) au moyen de la section de sectionnement (8) pour sectionner un sceau (11).

6. Dispositif (1) selon l'une quelconque des revendications précédentes, dans lequel le dispositif (1) présente une unité de maintien manipulable électroniquement ou manuellement pour maintenir l'élément de commutation mobile (7) dans une position initiale prédéfinie et l'unité de maintien est de préférence conçue de telle sorte que l'unité de maintien peut maintenir l'élément de commutation mobile (7) dans la position initiale prédéfinie pendant que de l'air comprimé provenant d'une source d'air comprimé (24) circule autour de l'élément de commutation (7), la position initiale prédéfinie de l'élément de commutation mobile (7) étant de manière particulièrement préférée à l'intérieur du canal de transport d'air comprimé (5) et/ou à l'extrémité côté distribution du canal de transport d'air comprimé (5).

7. Dispositif (1) selon l'une quelconque des revendications précédentes, dans lequel le dispositif (1) présente un élément de déclenchement (23) pour libérer manuellement le maintien de l'unité de maintien afin de provoquer un déplacement de l'élément de commutation mobile depuis la position initiale vers le raccord d'agent d'étanchéité (2), l'élément de déclenchement (23), l'unité de maintien et l'élément de commutation mobile (7) étant de préférence adaptés de telle sorte qu'après la libération de l'élément de déclenchement (23), un déplacement de l'élément de commutation mobile (7), provoqué au moyen d'air comprimé provenant d'une source d'air comprimé (24), peut être déclenché et le déplacement provoqué est approprié pour sectionner un sceau (11) sur le raccord d'un réservoir d'agent d'étanchéité (6) ou un sceau (11) sur le raccord d'agent d'étanchéité (2).

8. Dispositif (1) selon l'une quelconque des revendications précédentes, dans lequel le dispositif (1) présente une unité d'arrêt pour arrêter le déplacement de l'élément de commutation (7), l'unité d'arrêt étant de préférence montée dans le dispositif (1) de telle sorte que l'élément de commutation (7) n'est arrêté qu'après le sectionnement d'au moins un sceau (11) et après la conduite d'air comprimé à travers le canal intérieur de l'élément de commutation (7) vers le raccord d'agent d'étanchéité (2).

9. Dispositif (1) selon l'une quelconque des revendications précédentes, dans lequel le canal de transport d'air comprimé (5) est réalisé sous forme cylindrique et présente un diamètre intérieur et un diamètre extérieur et/ou dans lequel le dispositif présente un élément de ressort pour accélérer l'élément de commutation mobile (7) en direction du raccord d'agent d'étanchéité (2), l'élément de ressort étant réalisé de telle sorte qu'après la libération de l'élément de déclenchement (23) ou après une manipulation appropriée de l'élément de commutation (7), l'élément de ressort provoque une accélération de l'élément de commutation mobile (7) en direction du raccord d'agent d'étanchéité (2).

10. Système portable/transportable (38) pour l'étanchéification et le gonflage de pneus de véhicules, comprenant
- au moins un dispositif (1) selon l'une quelconque des revendications précédentes,
- des moyens de connexion pour connecter l'extrémité côté pneu du canal de transport d'agent d'étanchéité (4) à un pneu présentant une crevaison,
- au moins une source d'air comprimé (24), la source d'air comprimé (24) étant de préférence un compresseur et de préférence
- au moins un compresseur à piston alternatif avec un cylindre et un piston alternatif, et
- au moins un moteur pour déplacer le piston alternatif dans le cylindre du compresseur à piston alternatif,
et en option
- au moins un réservoir d'agent d'étanchéité (6) contenant un agent d'étanchéité (32),

11. Système portable/transportable (38) selon la revendication 10, dans lequel un raccord de connexion sur le réservoir d'agent d'étanchéité (6) prévu pour un raccord avec un raccord d'agent d'étanchéité (2) du dispositif (1) est scellé avec un sceau (11) et/ou le dispositif (1) est connecté de manière opérationnelle à la source d'air comprimé (24) par l'intermédiaire du raccord de gaz, au raccord de connexion du réservoir d'agent d'étanchéité (6) par l'intermédiaire du raccord d'agent d'étanchéité (2) et auxdits moyens de connexion.

12. Système portable/transportable (38) selon la revendication 10 ou la revendication 11, dans lequel le dispositif (1), la source d'air comprimé (24) et, en option, le réservoir d'agent d'étanchéité (6) sont agencés dans un seul boîtier, le boîtier étant de préférence réalisé pour être placé, en fonctionnement, de telle sorte que le réservoir d'agent d'étanchéité (6) dans le boîtier est agencé tête en bas dans le système (38).

13. Procédé d'étanchéification de pneus de véhicules, comprenant les étapes suivantes :
A) la fourniture d'un système (38) selon l'une quelconque des revendications 10 à 12 avec un réservoir d'agent d'étanchéité (6) avec un agent d'étanchéité (32) et un pneu de véhicule avec une crevaison,
B) la connexion du canal de transport d'agent d'étanchéité (4) du système (38) au pneu de véhicule avec la crevaison au moyen des moyens de connexion du système (38),
C) le déplacement de l'élément de commutation mobile (7) en direction du raccord d'agent d'étanchéité (2) au moyen d'air comprimé provenant de la source d'air comprimé (24), le déplacement étant de préférence déclenché au moyen d'une libération du maintien de l'unité de maintien,
D) l'utilisation d'un système (38) selon l'une quelconque des revendications 10 à 12 pour pomper de l'air comprimé provenant de la source d'air comprimé (24) dans un dispositif (1) selon l'une quelconque des revendications 1 à 9,
E) le sectionnement d'un sceau (11) sur le raccord d'agent d'étanchéité (2) et/ou sur le réservoir d'agent d'étanchéité (6), de telle sorte que l'agent d'étanchéité (32) puisse passer du réservoir d'agent d'étanchéité (6) dans le canal de transport d'agent d'étanchéité (4),
F) l'amenée d'agent d'étanchéité (32) du réservoir d'agent d'étanchéité (6) dans le pneu de véhicule au moyen de l'air comprimé provenant de la source d'air comprimé (24), de telle sorte que la crevaison sur le pneu de véhicule est au moins partiellement étanchéifiée au moyen de l'agent d'étanchéité (32) acheminé dans le pneu de véhicule.

14. Utilisation d'un système (38) selon l'une quelconque des revendications 10 à 12,
- pour le gonflage de pneus de véhicules et/ou
- pour l'étanchéification de pneus de véhicules.

15. Utilisation
- d'un élément de déclenchement (23) destiné à être utilisé dans un dispositif (1) tel que défini dans l'une quelconque des revendications 1 à 9 pour déclencher un déplacement d'un élément de commutation mobile (7) au moyen d'air comprimé provenant d'une source d'air comprimé (24), la section de sectionnement (8) de l'élément de commutation mobile (7) sectionnant de préférence un sceau (11) sur le raccord d'agent d'étanchéité (2) et/ou un sceau (11) sur un réservoir d'agent d'étanchéité (6).
